# EUROPÄISCHE PATENTSCHRIFT

(11) **EP 2 504 637 B1**
(45) Veröffentlichungstag und Bekanntmachung des Hinweises auf die Patenterteilung: **21.01.2015**
(21) Anmeldenummer: 10782270.2
(22) Anmeldetag: 23.11.2010
(51) Int. Cl.: B66F 11/04, F24J 2/46, B08B 3/02

(54) **REINIGUNGSANLAGE FÜR EINE SOLARANLAGE**
CLEANING SYSTEM FOR A SOLAR SYSTEM
INSTALLATION DE NETTOYAGE POUR UNE INSTALLATION SOLAIRE

(30) Priorität: 23.11.2009 DE 102009054160
(43) Veröffentlichungstag der Anmeldung: 03.10.2012
(73) Patentinhaber: Wocken Industriepartner GmbH & Co. KG, 49716 Meppen (DE)
(72) Erfinder: WOCKEN, Robert, 49716 Meppen (DE)
(74) Vertreter: Werner & ten Brink
(86) Internationale Anmeldenummer: PCT/EP2010/068032
(87) Internationale Veröffentlichungsnummer: WO 2011/061347

(56) Entgegenhaltungen:
- DE-U1-202009 009 020
- US-B1- 6 250 588

## Beschreibung

Die Erfindung betrifft eine Reinigungsanlage für eine Solaranlage und/oder Sonnenkollektoren gemäß Oberbegriff des Anspruchs 1. Als Solaranlage wird hier und im Folgenden eine Einrichtung verstanden, die Solarzellen und/oder Sonnenkollektoren umfasst. Eine Solarzelle oder photovoltaische Zelle ist bekanntlich ein elektrisches Bauelement zur Umwandlung kurzwelliger Strahlungsenergie, insbesondere Sonnenlicht, in elektrische Energie. Demgegenüber ist ein Sonnen- oder Solarkollektor eine Vorrichtung zur Sammlung der im Sonnenlicht enthaltenen Energie, wobei durch die Sonnenenergie ein Übertragungsmedium aufgeheizt wird.

Gemeinsam ist Solarzellen und Sonnenkollektoren die Ausführung als vergleichsweise großformatiges, flächiges Element. Speziell Sonnenkollektoren weisen an einer Oberfläche eine Glasscheibe oder dergleichen auf. Solarzellen haben ebenfalls eine Glasscheibe oder zumindest eine lichtdurchlässige (durchsichtige) Deckschicht. Eine derartige Deckschicht, Glasscheibe oder dergleichen werden im Folgenden kurz als Oberfläche bezeichnet und bei Solaranlagen ist bekannt, dass deren Oberfläche oder deren Oberflächen mit der Zeit verschmutzen, weil diese der Witterung ausgesetzt ist bzw. sind und sich insoweit Schwebstoffe und dergleichen auf der Oberfläche ablagern. Mit zunehmender Verschmutzung der Oberfläche sinkt der Wirkungsgrad der Solaranlage, weil bei einer verschmutzten Oberfläche ein Teil der ansonsten nutzbaren Sonnenenergie reflektiert oder absorbiert wird.

Zur Vermeidung einer solchen Verringerung des Wirkungsgrades kommt selbstverständlich eine Reinigung der Oberfläche in Betracht. Allerdings hat sich herausgestellt, dass eine Reinigung ebenfalls den Wirkungsgrad der Solaranlage herabsetzen kann, wenn nämlich im Zusammenhang mit der Reinigung auf der Oberfläche Reinigungsmittel zurückbleibt und/oder beim Reinigungsprozess die Oberfläche beschädigt wird. Hinsichtlich einer Beschädigung der Oberfläche beim Reinigungsprozess ist davon auszugehen, dass selbst hochfeine Kratzer oder dergleichen den Strahlgang des Sonnenlichts im jeweiligen Oberflächenmaterial beeinflussen, so dass es in unerwünschter Art und Weise zu einer Reflektion oder Absorption eines Teils der ansonsten zur Energiegewinnung nutzbaren Sonnenstrahlen kommt.

Ebenfalls oder zusätzlich zu berücksichtigen ist, dass Solaranlagen, speziell in Mitteleuropa, in großem Umfang auf Gebäuden errichtet werden, z.B. Gewerbeimmobilien mit Flachdächern oder einer Dachanlage mit eher geringer Neigung. Für eine bisherige manuelle Reinigung einer Solaranlage ist stets das Betreten solcher Dachanlagen erforderlich. Dabei gilt es zu berücksichtigen, dass solche Dachanlagen nur im Ausnahmefall zum Betreten vorgesehen sind und ein lang andauerndes Betreten im Zuge eines Reinigungsvorgangs zu Beschädigungen der Dachanlage, z.B. Undichtigkeiten, führen kann. Schließlich ist das Betreten solcher Dachanlagen nicht ungefährlich und Letzteres gilt in besonderem Maße für Wohngebäude, bei denen die Dachanlage häufig eine deutlich größere Schräge aufweist als dies bei Gewerbeimmobilien, wie Werkhallen und dergleichen, gegeben ist.

Aus der DE 20 2009 009 020 U1 ist eine transportable und erweiterbare Reinigungsmaschine für Solaranlagen bekannt, die auf die jeweilige Solaranlage aufgesetzt wird und während des Reinigungsvorgangs auf der Solaranlage hin- und herfahren kann. Die US 6,250,588 B, die DE 44 28 146 A und die US 5,318,254 B zeigen allesamt sogenannte Manipulatoren und deren Verwendung bei der Enteisung von Flugzeugen. Speziell bei der DE 44 28 146 A und der US 5,318,254 B wird dabei allerdings von einer bekannten Geometrie der Flugzeuge ausgegangen und eine Bewegungsbahn des Manipulators richtet sich nach dieser Geometrie, wobei eine Anpassung der Geometriedaten ggf. noch in Bezug auf den jeweiligen Standort des Manipulators erfolgt.

Eine Aufgabe der vorliegenden Erfindung besteht darin, eine Reinigungsanlage für Solarzellen anzugeben, die zumindest einzelne Nachteile der im Stand der Technik bekannten Lösungen vermeidet oder zumindest deren Auswirkungen reduziert.

Danach ist zur Lösung dieser Aufgabe eine Reinigungsanlage mit den Merkmalen des Kennzeichens des Anspruchs 1 vorgesehen. Diese zeichnet sich durch ein frei stehendes, mobiles Auslegersystem mit einer Werkzeugaufnahme an dessen Ende sowie eine Steuerungsvorrichtung aus, wobei mit der Werkzeugaufnahme eine Reinigungsvorrichtung verbindbar ist.

Als frei stehendes, mobiles Auslegersystem kommt z.B. eine Arbeitsbühne, insbesondere in einer Ausführung als Gelenkarbeitsbühne mit oder ohne teleskopierbare Segmente, in Betracht. Bisher weisen solche Auslegersysteme am Ende des jeweiligen Auslegerarms einen Arbeitskorb auf, der von einem Bediener betreten wird und von diesem dann in die gewünschte Arbeitsposition manövriert wird. Die Reichweite des Auslegersystems ist allerdings durch die Tragfähigkeit beschränkt und ein Bediener im Arbeitskorb reduziert die Auslegeweite deutlich. Entsprechend ist vorgesehen, dass das Ausleger-system an seinem Ende eine Werkzeugaufnahme aufweist und mit der Werkzeugaufnahme eine Reinigungsvorrichtung verbindbar ist. Die Reinigungsvorrichtung kann dann unmittelbar mit dem Auslegersystem in Position gebracht werden, ohne dass eine manuelle Bedienung der Reinigungsvorrichtung erforderlich wäre. Eine Anwesenheit einer Bedienperson im Arbeitskorb ist entsprechend nicht erforderlich. Um die Auslegerweite noch weiter zu verbessern, kann der Arbeitskorb sogar komplett entfallen, was mit einer weiteren Gewichtsersparnis am Ende des Auslegerarms einhergeht. Mit der Reinigungsvorrichtung am Ende des Auslegersystems oder dessen Auslegerarms lassen sich eine Solaranlage und die davon umfassten Elemente, nämlich Solarzellen und/oder Sonnenkollektoren, für eine Reinigung erreichen, ohne dass dafür eine Dachanlage oder eine vergleichbare Einrichtung auf oder an der die Solaranlage angebracht ist, betreten werden muss. Eine Beschädigung der Dachanlage durch das ansonsten erforderliche Betreten der Dachanlage und die damit einhergehende Gewichtsbelastung ist damit ausgeschlossen. Zudem ist die mit dem Betreten von Dachanlagen oder dergleichen einhergehende Personengefährdung ausgeschlossen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass die Reinigungsvorrichtung zumindest eine Düse zur berührungslosen Reinigung der Solaranlage umfasst. In einer solchen Konfiguration erfüllt die Reinigungsanlage nicht nur die Aufgabe im Hinblick auf eine Vermeidung von Schäden an Gebäuden oder Gebäudeteilen und Personenschäden, sondern auch die Aufgabe, beim Reinigen eine Beeinträchtigung der Oberfläche oder der Oberflächen der Solaranlage zu vermeiden, die sich ansonsten stets ergibt, wenn bei der Reinigung ein mechanischer Kontakt mit der jeweiligen Oberfläche stattfindet.

Wenn die Reinigungsvorrichtung einen Düsenträger, insbesondere einen lang gestreckten Düsenträger, zur Aufnahme einer Mehrzahl von Düsen umfasst, erhöht sich der räumliche Wirkungsbereich der Reinigungsvorrichtung und bei einem lang gestreckten Düsenträger kann dieser parallel zu einer durch die Oberfläche oder die Oberflächen der Solaranlage definierten Ebene ausgerichtet werden, so dass eine Reinigung der Solaranlage in einem großflächigen Bereich gleichzeitig stattfindet. Bevorzugt ist der lang gestreckte Düsenträger in seiner Dimension auf eine übliche Breite oder Höhe der jeweiligen Elemente der Solaranlage abgestimmt, so dass durch einen Bewegungsvorgang des Auslegersystems der Düsenträger über die komplette Fläche des jeweiligen Elements der Solaranlage geführt und dieses auf diese Weise gereinigt werden kann.

In einer besonders bevorzugten Ausführungsform ist für den Düsenträger vorgesehen, dass dieser teleskopierbar und/oder modular erweiterbar ist. Auf diese Weise kann die Längserstreckung des Düsenträgers an die jeweiligen Dimensionen der Komponenten der Solaranlage angepasst werden. Zur modularen Erweiterung des Düsenträgers eignen sich steckbare Rohrsegmente, die jeweils zumindest eine Düse umfassen und am jeweiligen Ende des Düsenträgers, eventuell an beiden Enden eines Düsenträgers, anbringbar sind.

Vorteilhaft umfasst die Reinigungsanlage eine zum Absetzen von Bedienkommandos an die Steuerungseinrichtung vorgesehene Bedieneinrichtung. Die Bedieneinrichtung ermöglicht damit eine manuelle Steuerung des Auslegersystems und/oder der Reinigungsvorrichtung. Die manuelle Steuerung des Auslegersystems ermöglicht eine geeignete Positionierung der Reinigungsvorrichtung, damit der angestrebte Reinigungsvorgang erfolgen kann. Die manuelle Bedienung der Reinigungsvorrichtung ermöglicht deren Aktivierung oder Deaktivierung, aber auch eine Beeinflussung einer Orientierung der Reinigungsvorrichtung und im Weiteren z.B. auch eine Beeinflussung einer Orientierung des Düsenträgers oder eine Rotation eines lang gestreckten Düsenträgers. Über die Bedieneinrichtung kann die Reinigungsanlage vom zuständigen Bedienpersonal komplett bedient werden. Die Bedieneinrichtung kann mit der Reinigungsanlage und deren Steuerungseinrichtung leitungslos oder leitungsgebunden verbunden sein, so dass sich das Bedienpersonal auch von dem Auslegersystem entfernen kann, um z.B. eine bessere Übersicht über die zu reinigende Solaranlage und die Position der Reinigungsvor-richtung in oder an der Solaranlage zu gewinnen.

Vorteilhaft sind Bildaufnahmemittel im Bereich der Werkzeugaufnahme und/oder der Reinigungsvorrichtung vorgesehen. Mit einer im Bereich der Bedieneinrichtung vorgesehenen oder mit dieser kombinierten Anzeigeeinrichtung, z.B. einem Monitor, sind die von dem oder den Bildaufnahmemitteln erhältlichen Bildinformationen darstellbar. Eine solche Ausführungsform der Reinigungsanlage hat den Vorteil, dass das Bedienpersonal über die an der Anzeigeeinrichtung dargestellten Bildinformationen über die Position des Auslegersystems, seiner Reinigungsvorrichtung und/oder des Düsenträgers informiert wird, so dass eine Bedienung der Reinigungsanlage auch in Bereichen der Solaranlage möglich ist, die vom normalen Standpunkt des Bedienpersonals nicht einsehbar sind. Zudem kann auf diese Weise der Reinigungsfortschritt überwacht werden und bei einem Bereich oder Bereichen der Solaranlage mit höherer Verschmutzung die Art der Reinigung angepasst werden, z.B. durch Erhöhung eines Wasserdrucks, durch Verwendung zusätzlicher oder anderer Reinigungsmittel, durch Erhöhung der Menge des Reinigungsmittels, durch Erhöhung der Reinigungsdauer, etwa durch Erhöhung einer Einwirkzeit oder dergleichen, usw.

Bevorzugt ist vorgesehen, dass die Reinigungsanlage einen Positionsinformationsspeicher, z.B. als Funktionseinheit der Steuerungseinrichtung, umfasst. In dem Positionsinformationsspeicher sind Positionsinformationen ablegbar, die eine Position und Orientierung des Auslegersystems und der Reinigungsvorrichtung kodieren. Eine durch eine Folge derartiger Positionsinformationen festgelegte Bewegungsbahn (Trajektorie) ist aus diesem Positionsinformationsspeicher zum erneuten Abfahren abrufbar. Bei einer manuellen Bedienung der Reinigungsanlage, gleich ob das Bedienpersonal diese durch unmittelbaren Sichtkontakt mit allen relevanten Komponenten oder durch visuelle Kontrolle mittels der Anzeigeeinrichtung bedient, können einzelne Positionsinformationen erfasst werden, so dass die sich daraus ergebende Bewegungsbahn zum erneuten Abfahren zur Verfügung steht. Dies ist besonders günstig, wenn die Reinigung der Solaranlage in mehreren Durchgängen erfolgt, z.B. indem mit der Reinigungsvorrichtung ein Abspülen der Solaranlage zum Aufweichen eventueller Ver-schmutzungen und zur Vorreinigung erfolgt, sodann mit einem Reinigungsmittel der eigentliche Reinigungsvorgang erfolgt und in einem weiteren oder abschließenden Bearbeitungsschritt das Reinigungsmittel abgespült wird. Sämtliche drei skizzierten Reinigungsschritte werden sukzessive ausgeführt, wobei für jeden Schritt die komplette Fläche der Solaranlage oder bei einer mehrteiligen Solaranlage die betreffenden einzelnen Abschnitte abgefahren werden. Ohne einen solchen Positionsinformationsspeicher müsste das Bedienpersonal auch beim zweiten und jedem weiteren Reinigungsschritt die Reinigungsanlage, deren Auslegersystem, die Reinigungsvorrichtung und den Düsenträger steuern. Mit dem Positionsinformationsspeicher ist dies nur während des ersten Reinigungsschrittes erforderlich, mit dem die Bewegungsbahn für alle anschließenden Reinigungsschritte festgelegt wird, so dass diese automatisch und ohne weiteren Bedieneingriff erfolgen können. Dies und Weiteres, wie nachfolgend beschrieben, resultiert aus der Erkenntnis des Erfinders, dass ein Auslegersystem hinsichtlich seiner Kinematik wie ein Industrieroboter aufgefasst werden kann, für die, insbesondere in einer Kon-figuration als Gelenkarmroboter mit oder ohne zusätzliche translatorische Segmente, sogenannte Bahnplanungsverfahren (Trajektorienplanung) zum Erreichen einer vorgegebenen Zielkonfiguration ausgehend von einer aktuellen oder vorgegebenen Startkonfiguration in der Fachliteratur bekannt sind, auf die hier verwiesen wird.

Alternativ oder zusätzlich ist vorgesehen, dass die Reinigungsanlage eine zum Absetzen von Positionierinformationen an die Steuerungseinrichtung vorgesehene Bewegungsbahnermittlungseinrichtung umfasst. Als Bewegungsbahnermittlungseinrichtung kommen Bildaufnahmemittel und Bildverarbeitungsmittel in Betracht. Das oder die Bildaufnahmemittel sind im Bereich der Werkzeugaufnahme und/oder der Reinigungsvorrichtung angeordnet. Das oder die Bildverarbeitungsmittel sind zur Verarbeitung von von dem oder den Bildaufnahmemitteln erhältlichen Bildinformationen vorgesehen sowie zur Ableitung von Positionierinformationen daraus. Durch die Bildaufnahme und Bildverarbeitung werden also z.B. charakteristische Konturen der Solaranlage, etwa eine Kante eines Elements in einer Solaranlage, erkannt und die Ableitung von Positionierinformationen aus einer solchen erkannten Kante bewirkt, dass sich die Reinigungsanlage, insbesondere deren Reinigungsvorrichtung, entlang der Kante bewegt.

Eine alternative Ausführungsform der Bewegungsbahnermittlungseinrichtung ist eine Raumpunktdetektionssensorik zum Erkennen markierter Punkte der Solaranlage und zur Ableitung von Positionierinformationen daraus. Charakteristische Punkte der Solaranlage, z.B. Eck- oder Randpunkte, können z.B. magnetisch markiert sein, so dass ein induktiver Sensor das Magnetfeld der entsprechenden Markierung erkennen kann und daraus eine Positionsinformation ableitbar ist. Des Weiteren kommt in Betracht, dass der Solaranlage ein elektrischer Leiter zugeordnet ist, dessen Magnetfeld bei Stromfluss ebenfalls von einem induktiven Sensor erkennbar ist, so dass die Reinigungsanlage, insbesondere mit ihrer Reinigungsvorrichtung, dem Verlauf des elektrischen Leiters folgen kann.

Besonders bevorzugt ist für die Reinigungsanlage mit einem Positionsinformationsspeicher, in dem Positionsinformationen ablegbar sind, vorgesehen, dass in dem Positionsinformationsspeicher zumindest oder auch Positionsinformationen ablegbar sind, die eine Position und Orientierung des Auslegersystems und der Reinigungsvorrichtung, eventuell auch des Düsenträgers, kodieren. Eine solche Positionsinformation ist in dem Positionsinformationsspeicher ablegbar, wenn eine vorgegebene oder vorgebbare Bedingung erfüllt ist. Als vorgegebene oder vorgebbare Bedingung kommt z.B. eine Benutzereingabe in Betracht, also z.B. die Betätigung einer Taste. Die Bewegungsbahnermittlungseinrichtung hat zur Ableitung von Positionierinformationen auf den Positionsinformationsspeicher und darin abge-legte Positionsinformationen Zugriff. Im Betrieb der Reinigungsanlage werden diese, also dessen Auslegersystem und die Reinigungsvorrichtung, mittels der Bedieneinrichtung nacheinander in charakteristische Raumpunkte der Solaranlage bezeichnende Positionen und Orientierungen angefahren. Sobald ein solcher charakteristischer Raumpunkt erreicht ist, wird die vorgegebene Bedingung z.B. dadurch erfüllt, dass eine Benutzereingabe erfolgt. Daraufhin wird eine die momentane Position und Konfiguration der Reinigungsanlage kodierende Positionsinformation in den Positionsinformationsspeicher übernommen. Wenn auf diese Weise alle relevanten charakteristischen Raumpunkte der Solaranlage angefahren sind, bei einer Solaranlage mit nur einer rechteckigen Fläche also zumindest drei Eckpunkte, können mit den so ermittelten Daten im Positionsinformationsspeicher die Dimension und Geometrie der zu reinigenden Solaranlage bestimmt werden. Entsprechend können aus den Daten im Positionsinformationsspeicher Positionsinformationen zur automatischen Steuerung des Auslegersystems und/oder der Reinigungsvorrichtung abgeleitet werden. Die Notwendigkeit von Benutzereingaben bei diesem Grad der Automatisierung der Reinigungsanlage ist also auf die Vorgabe der charakteristischen Raumpunkte der Solaranlage beschränkt. Dies kann durch die Reinigungsanlage und deren Steuerungseinrichtung dadurch unterstützt werden, dass dem jeweiligen Bedienpersonal bei Benutzung der Reinigungsanlage einzelne Standardgeometrien, z.B. rechteckige Geometrien, zur Auswahl vorgeschlagen werden und die Steuerungseinrichtung nach einer solchen Auswahl an einem Monitor z.B. ein rechteckiges Feld anzeigt, in dem dessen beide oberen Ecken und eine untere Ecke markiert sind, um das Bedienpersonal darauf hinzuweisen, welche Raumpunkte der aktuell zu reinigenden Solaranlage als charakteristische Raumpunkte geeignet sind, so dass das Bedienpersonal dann nacheinander die so vorgegebenen Positionen auf der Solaranlage anfährt. Der Umfang der Bedienhandlung ist insoweit auf ein Minimum beschränkt und kann wie beschrieben noch unterstützt werden, um sicherzustellen, dass praktikable Raumpunkte ausgewählt werden. Mit den danach im Positionsinformationsspeicher vorliegenden Daten kann die Reinigungsanlage, speziell dessen Steuerungseinrichtung, die notwendige Bewegungsbahn zum Reinigen der Solaranlage komplett selbst bestimmen, so dass ein Benutzereingriff während des Reinigungsvorgangs zum Positionieren der Reinigungsanlage normalerweise nicht erforderlich ist. Bei der Ermittlung der Bewegungsbahn berücksichtigt die Steuerungsvorrichtung die von der Reinigungsvorrichtung, insbesondere dem Düsenträger, jeweils erfassbare Fläche, so dass die Bewegungsbahn für den Reinigungsvorgang so bestimmt wird, dass eine lückenlose Reinigung der Solaranlage gewährleistet ist.

Die Vorgabe charakteristischer Raumpunkte der Solaranlage wie oben beschrieben kann neben charakteristischen Punkten einer zu reinigenden Fläche auch charakteristische Punkte anderer Teile der Solaranlage oder einer Gebäudekonstruktion oder dergleichen umfassen, die zur Kollisionsvermeidung für die Steuerungsvorrichtung bei der Ermittlung einer Bewegungsbahn erforderlich sind. Dies kommt z.B. in Betracht, wenn eine Solaranlage aus mehreren Reihen jeweils in einem Winkel angestellter und hintereinander angeordneter Sonnenkollektoren oder Solarzellen besteht. Bei einer Reinigung einer jeden Reihe solcher Elemente, die von der Position der Reinigungsanlage aus gesehen hinter einer oder mehreren Reihen anderer solcher Elemente befindlich ist, ist selbstverständlich für die Reinigungsanlage und deren Auslegearm oder die Reinigungsvorrichtung eine Berührung mit solchen Elementen zu vermeiden (Kollisionsvermeidung). Soweit hier und im Folgenden für die Steuerungsvorrichtung eine automatische Kollisionserkennung und Kollisionsvermeidung vorgeschlagen wird, basiert dies auf der bereits erwähnten Erkenntnis, dass das Auslegersystem und die Reinigungsvorrichtung hinsichtlich seiner Kinematik wie ein Industrieroboter aufgefasst werden kann. Für Industrieroboter sind Ansätze zur Kollisionserkennung und - vermeidung wie auch Ansätze zur Planung kollisionsfreier Bewegungsbahnen bekannt. Insoweit wird auf die einschlägige Fachliteratur für Robotersysteme verwiesen. Eine Übersicht über in so weit bekannte Verfahren ist z.B. in der Dissertation von Matthias Ortmann, "Die Anwendung von Evolutionsstrategien zur adaptiven, echtzeitfähigen Trajektorienplanung von Manipulatorarmsystemen", Ruhr-Universität Bochum, 2002, Fakultät für Elektrotechnik und Informationstechnik, erwähnt.

Auch eine Vorgabe solcher Raumpunkte kann für das Bedienpersonal durch die Steuerungsvorrichtung unterstützt werden, z.B. indem zwischen Raumpunkten einer zu reinigenden Fläche und Raumpunkten, die zur Kollisionsvermeidung erforderlich sind, unterschieden wird, z.B. derart, dass zunächst die zur Kollisionsvermeidung erforderlichen Raumpunkte eingegeben werden und erst danach die zur Definition der zu reinigenden Fläche erforderliche Raumpunkte angefahren werden, was den zusätzlichen Vorteil mit sich bringt, dass auch beim Anfahren der die zu reinigende Fläche definierenden Raumpunkte die Kollisionsvermeidung unmittelbar wirksam sein kann, so dass auch bei solchen Bedienhandlungen eine sonst eventuell zu besorgende Beschädigung der Solaranlage weitestgehend ausgeschlossen ist. Wenn auf diese Weise die für die Kollisionsvermeidung erforderlichen Raumpunkte definiert sind, kann die sich danach ergebende Geometrie eines zu vermeidenden Bereichs auch graphisch auf einem Monitor der Reinigungsanlage angezeigt werden, so dass das Bedienpersonal die Möglichkeit einer Plausibilitätsprüfung der vorgegebenen Daten erhält.

Zur Kollisionsvermeidung erforderliche Raumpunkte können sich auch implizit ergeben, nämlich z.B. dann, wenn eine großflächige Solaranlage aus mehreren Reihen hintereinander angeordneter Elemente besteht. Bei einer solchen Solaranlage würde der Steuerungsvorrichtung in einem Auswahlmenü zur Einleitung des Prozesses der Vorgabe der charakteristischen Raumpunkte die Mehrteiligkeit der Anlage angegeben werden, also z.B. mehrere hintereinander angeordnete rechteckige Flächen. Der sich daran anschließende Benutzerdialog würde das Bedienpersonal auffordern, zunächst die charakteristischen Raumpunkte der ersten, "vorne" liegenden Fläche anzugeben, woraus zum Einen die Raumpunkte zur Ermittlung der Bewegungsbahn zur Reinigung dieses ersten Flächenabschnitts resultieren, woraus zum Anderen aber auch für die dahinter liegende Fläche unmittelbar die zur Kollisionsvermeidung erforderlichen Raumpunkte resultieren. Eine erneute Eingabe der Raumpunkte dieser ersten Fläche ist danach nicht erforderlich und es ist unmittelbar möglich, die Raumpunkte der zweiten Fläche einzugeben. Mit diesen Raumpunkten kann die Ermittlung der Bewegungsbahn für diese zweite Fläche erfolgen und in einem nachgeordneten Schritt stehen diese Raumpunkte für die Kollisionsvermeidung zur Verfügung. Dieses Prozedere wird sukzessive für alle von der Solaranlage umfassten Reihen fortgesetzt, so dass bei der Reinigung jeder Reihe, die "hinter" einer oder mehreren anderen Reihen liegt, die jeweils davor liegenden Reihen sicher bei der Kollisionsvermeidung berücksichtigt werden. Wenn eine zweite und evtl. auch jede weitere Fläche der ersten Fläche nach Dimension und Orientierung ähnelt oder ausreichend identisch ist, ist evtl. sogar eine Eingabe mehrerer Raumpunkte der zweiten und jeder weiteren Fläche entbehrlich und es reicht die Eingabe eines charakteristischen Raumpunktes aus, aus dem sich anhand der bekannten Geometrie und Orientierung der ersten Fläche die weiteren charakteristischen Raumpunkte der zweiten und evtl. jeder weiteren Fläche ergeben.

Bevorzugt ist vorgesehen, dass in dem Positionsinformationsspeicher eine Anzahl von Stützpunkten auf einer beim Reinigen der Solaranlage abgefahrenen Bewegungsbahn wiederaufrufbar abspeicherbar ist, insbesondere solaranlagenspezifisch abspeicherbar ist. Diese Variante der Reinigungsanlage erleichtert deren kommerziellen Einsatz, z.B. für Reinigungsfirmen. Durch die Möglichkeit, abgefahrene Bewegungsbahnen in dem Positionsinformationsspeicher abzuspeichern, entfällt bei einer Folgereinigung teilweise oder vollständig die Notwendigkeit, die dafür erforderlichen Informationen erneut generieren zu müssen.

Besonders bevorzugt ist für den Betrieb der Reinigungsanlage beim Auswählen anlagenspezifisch gespeicherter Bewegungsbahnen vorgesehen, dass beim Abruf einer solchen im Positionsinformationsspeicher gespeicherten Bewegungsbahn ein charakteristischer Punkt der Bewegungsbahn automatisch angezeigt und der Benutzer zum Anfahren dieses Punkts aufgefordert wird. Nach dem manuellen Anfahren dieses Punkts wird anhand einer sich dann ergebenden Position und Orientierung des Auslegersystems und/oder der Reinigungsvorrichtung die abgerufene Bewegungsbahn auf die Position der Reinigungsanlage umgerechnet. Diese Ausgestaltung der Reinigungsanlage zielt darauf ab, abgespeicherte Bewegungsbahnen auch für unterschiedliche Aufstellpunkte der Reinigungsanlage verfügbar zu machen. Wenn eine Solaranlage mit einer Reinigungsanlage wie hier und nachfolgend beschrieben zum ersten Mal gereinigt wird, können dabei generierte Daten in den Positionsinformationsspeicher übernommen werden. Diese Daten sind jedoch mit der jeweiligen Aufstellposition der Reinigungsanlage korreliert. Wenn dieselbe Solaranlage zu einem späteren Zeitpunkt erneut gereinigt wird, ist normalerweise nicht anzunehmen, dass es dem Bedienpersonal ohne Weiteres gelingt, die Reinigungsanlage in exakt der gleichen Position aufzustellen wie dies beim ersten Reinigen der Solaranlage der Fall gewesen ist. Mit einer abweichenden Aufstellposition geht jedoch einher, dass die Punkte der abgespeicherten Bewegungsbahn nicht mehr direkt mit der seinerzeitigen Konfiguration der Reinigungsanlage angefahren werden können. Entsprechend ist vorgesehen, dass die Steuerungsvorrichtung automatisch einen charakteristischen Punkt der Bewegungsbahn auswählt und diesen dem Bedienpersonal auf einem Bildschirm anzeigt. Das Bedienpersonal wird damit dazu aufgefordert, mit der Reinigungsanlage diesen Punkt anzufahren. Sobald der Punkt erreicht ist, wird dies vom Bedienpersonal mit einer Benutzereingabe bestätigt und für die Steuerungsvorrichtung liegen dann Daten für die momentane Konfiguration der Reinigungsanlage vor, also Daten für eine Konfiguration (Winkelstellung der einzelnen Gelenke und/oder Ausfahrweiten von translatorisch beweglichen Elementen und dergleichen), in der der ausgewählte charakteristische Punkt ausgehend von der derzeitigen Aufstellposition der Reinigungsanlage erreicht werden kann. Mit diesen Daten ist eine Umrechnung der abgerufenen Bewegungsbahn auf die aktuelle Aufstellposition der Reinigungsanlage möglich, so dass eine ansonsten erforderliche Dokumentation einer ursprünglichen Aufstellposition und die Einrichtung der Reinigungsanlage in exakt der gleichen Aufstellposition beim erneuten Reinigen der Solaranlage nicht mehr erforderlich ist.

Für den Betrieb der Reinigungsanlage ist bevorzugt vorgesehen, dass mit der Reinigungsvorrichtung ein Reinigungsmittel und danach eine Spülflüssigkeit, insbesondere zunächst Wasser, dann das Reinigungsmittel und dann die Spülflüssigkeit, berührungslos auf die Solaranlage aufgetragen wird. Das berührungslose Auftragen von Reinigungsmittel und Spülflüssigkeit vermeidet die oben beschriebenen Probleme, wie sie mit einem Reinigungsvorgang einhergehen, der einen mechanischen Kontakt mit der Oberfläche der Solaranlage involviert. Die Verwendung einer Spülflüssigkeit nach dem Reinigungsmittel hat den Vorteil, dass das Reinigungsmittel und Rückstände davon soweit wie möglich von der Solaranlage wieder entfernt werden. Eine Beeinträchtigung des Wirkungsgrads der Solaranlage durch etwaige Rückstände des Reinigungsmittels ist somit vermieden oder auf ein Minimum reduziert. Als Spülflüssigkeit kommt Wasser, in einer bevorzugten Ausführungsform destilliertes Wasser, demineralisiertes Wasser oder deionisiertes Wasser zum Einsatz. Das Reinigungsmittel ist speziell zum Entfernen von Verunreinigungen in Form von Kalken und Salzen und dergleichen auf der Oberfläche der Solaranlage vorgesehen. Für das Reinigungsmittel kann vorgesehen sein, dass dieses beim Aufbringen schäumt. Weiter kommen als Reinigungsmittel oder Bestandteile eines solchen sogenannte Enzymreiniger in Betracht. Das Reinigungsmittel ist so gewählt, dass sich die Reinigungswirkung durch das Auflösen chemischer Verbindungen bei organischen Verschmutzungen ergibt. Das Reinigungsmittel ist weiterhin biologisch abbaubar und damit grundwasserneutral. Ein pH-Wert des Reinigungsmittels liegt im Bereich von 9,7; das Reinigungsmittel ist damit basisch bis leicht alkalisch. Als Einwirkzeit kommen bei der Anwendung des Reinigungsmittels mit dem hier und folgenden Beschriebenen Verfahren und der korrespondierenden Vorrichtung Zeiträume in der Größenordnung von ein bis fünf Minuten in Betracht. Als Reinigungsmittel mit den oben skizzierten Eigenschaften kommen z.B. die folgenden von der Anmelderin unter deren Marke "W-Kronen" angebotenen Reiniger in Betracht: KT-20 Kraftreiniger (universal Reinigungskonzentrat), KT-Multi Cleaner (entemulgierender Intensivreiniger), TP 300 Jumbo Cleaner und PC-Aktivschaum. Wenn vor dem Aufbringen des Reinigungsmittels noch ein separater Reinigungsvorgang zum Abspülen der Solaranlage vorgesehen ist, kann dies normalerweise mit Leitungswasser erfolgen, das eventuell aufgeheizt ist und mit einem Druck in der Größenordnung von 10-20 bar aufgetragen wird. Das Nachreinigen der Solaranlage, insbesondere mit speziell aufbereitetem Wasser wie oben beschrieben, hat den Vorteil, dass das Anhaften zukünftiger Verschmutzungen reduziert wird, so dass der Zeitpunkt, zu dem eine erneute Reinigung der Solaranlage erforderlich ist, verschoben werden kann, so dass längere Reinigungszyklen, also z.B. alle sechs oder sieben Jahre, während normalerweise eine Reinigung alle drei bis fünf Jahre sinnvoll erscheint, möglich sind.

Der Vorgang des Abspülens der Solaranlage kann in Ansehung der jeweiligen Witterungslage durch die Steuerungsvorrichtung automatisch angepasst werden. Dazu umfasst die Steuerungsvorrichtung zumindest einen Feuchtigkeitssensor, um z.B. zu erkennen, ob die Solaranlage aufgrund von niedergehendem Niederschlag ohnehin mit Regenwasser benetzt ist, so dass die Notwendigkeit eines "Einweichens" von Verschmutzungen auf der Solaranlage reduziert ist und entsprechend der Reinigungsschritt des Abspülens verkürzt oder modifiziert werden kann. Hinsichtlich einer Modifikation dieses Reinigungsvorgangs kommt z.B. in Betracht, dass ein eventueller zweistufiger Reinigungsvorgang beim Abspülen der Solaranlage, der in einer ersten Stufe ein Vernebeln von Wasser vor der Oberfläche der Solaranlage und sodann ein Abspülen mit Hochdruck vorsieht, der Schritt der Vernebelung des Wassers entfallen kann, weil anhand des Signals des Feuchtigkeitssensors erkennbar ist, dass die Oberfläche der Solaranlage bereits mit Feuchtigkeit benetzt ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Arbeitsverfahren betreffen.

Es zeigen
FIG 1 eine Arbeitsbühne mit Arbeitskorb an einem Ende von dessen Auslegerarm,
FIG 2 eine Reinigungsanlage mit einem Auslegersystem nach Art einer Arbeitsbühne,
FIG 3 eine Reinigungsvorrichtung der Reinigungsanlage mit weiteren Details,
FIG 4 im Wesentlichen die Reinigungsanlage gemäß FIG 2, zusätzlich jedoch mit einer Sensorik, die einen halbautomatischen oder automatischen Betrieb der Reinigungsanlage ermöglicht,
FIG 5 eine Darstellung einer Bewegungsbahn, wie sie sich für die Reinigungsanlage aufgrund manueller Bedienung ergeben kann und die davon ausgehend bestehenden Möglichkeiten zur automatischen Optimierung solcher Bewegungsbahnen durch eine Steuerungsvorrichtung der Reinigungsanlage und einen dort implementierten Optimierungsalgorithmus und
FIG 6 eine Darstellung zur Veranschaulichung einer automatisch mit der Reinigungsanlage möglichen Vermeidung eventueller Kollisionen mit einer zu reinigenden Solaranlage oder dergleichen aufgrund eines in der Steuerungsvorrichtung der Reinigungsanlage implementierbaren Kollisionsvermeidungsalgorithmus oder eines Algorithmus zur automatischen Ableitung kollisionsfreier Bewegungsbahnen.

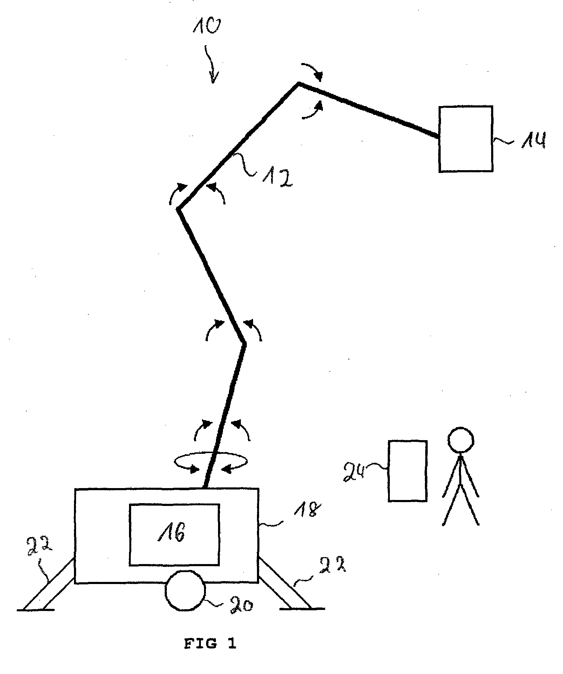

FIG 1 zeigt in schematisch bewusst stark vereinfachter Art und Weise eine so genannte Arbeitsbühne. Derartige Arbeitsbühnen oder dergleichen werden hier und im Folgenden als frei stehendes mobiles Auslegersystem 10 bezeichnet. Das jeweilige Auslegersystem 10 zeichnet sich durch eine durch die Bauart bestimmte Kinematik aus. In Betracht kommen als Bestandteile eines Auslegerarms 12 rotatorisch oder translatorisch bewegliche Segmente. Jedes Segment kann auch als Freiheitsgrad oder Gelenk des Auslegersystems 10 oder des Auslegerarms 12 aufgefasst werden. In der dargestellten Konfiguration umfasst das Auslegersystem 10 fünf Freiheitsgrade, nämlich einen Freiheitsgrad für eine Gierbewegung und daran anschließend vier Freiheitsgrade jeweils für eine Nickbewegung. Am Ende des Auslegerarms 12 ist ein Arbeitskorb 14 angebracht, der durch Änderung der Konfiguration der einzelnen Segmente des Auslegerarms 12 in eine gewünschte Position verfahrbar ist.

Zum Beeinflussen der Konfiguration des Auslegerarms 12 und der davon umfassten Segmente ist eine Steuerungseinrichtung 16 vorgesehen, die z.B. einem Standelement 18 des Auslegersystems 10 zugeordnet ist. Das Standelement 18 ist ebenfalls nur stark vereinfacht dargestellt. Dieses umfasst z.B. ein Hydraulik- oder Pneumatikaggregat zum Beeinflussen der Konfiguration der einzelnen Segmente des Auslegerarms 12, eventuell eine Einheit zum Generieren elektrischer Energie mit z.B. einem von dem Auslegersystem 10 mitgeführten Verbrennungsmotor, Räder 20 oder dergleichen zum einfachen Positionieren des Auslegersystems 10, ausfahrbare Stützelemente 22 oder Ähnliches, um die Standfestigkeit des Auslegersystems 10 und eventuell die Reichweite von dessen Auslegerarm 12 zu erhöhen usw. Details sind zur Verbesserung der Übersichtlichkeit nicht dargestellt.

Zum Bedienen des Auslegersystems 10 ist eine Bedieneinrichtung 24 vorgesehen, die mit der Steuerungseinrichtung 16 kombiniert oder, wie dargestellt, von der Steuerungseinrichtung 16 unabhängig sein kann. Bei einer von der Steuerungseinrichtung 16 unabhängigen Bedieneinrichtung 24 kommt eine leitungslose oder leitungsgebundene Kommunikation zwischen Bedieneinrichtung 24 und Steuerungseinrichtung 16 in Betracht, so dass an der Bedieneinrichtung 24 eingegebene Bedienkommandos zur Steuerungseinrichtung 16 gelangen und sich dort zur Beeinflussung des Auslegersystems 10, speziell für dessen Positionierung, auswirken. Die Bedieneinrichtung 24 ist insoweit zur Verwendung durch einen Bediener vorgesehen, der den Arbeitskorb 14 besteigen kann, um an der mit dem Auslegerarm 12 erreichten Position Arbeiten durchzuführen.

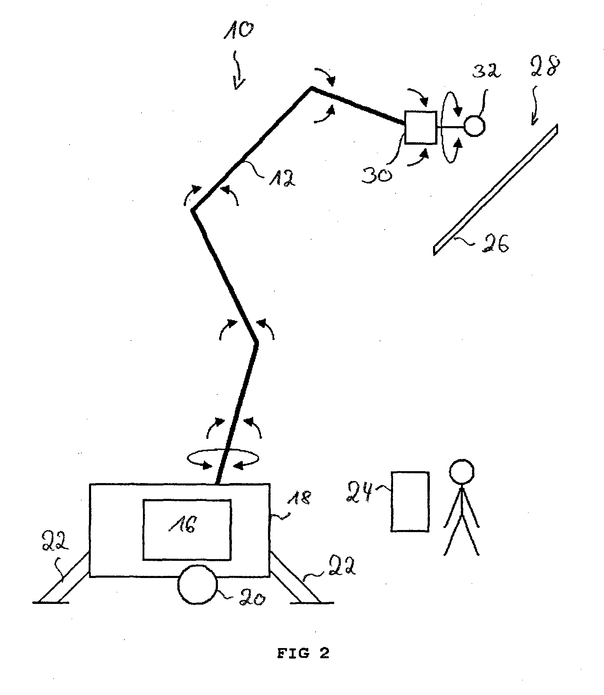

FIG 2 zeigt eine Reinigungsanlage für eine Solarzellen oder Sonnenkollektoren 26 umfassende Solaranlage 28, wobei die Reinigungsanlage im Wesentlichen das in FIG 1 dargestellte Auslegersystem 10 ist. Anstelle des Arbeitskorbs 14 (FIG 1), oder eventuell auch zusätzlich zu einem solchen Arbeitskorb 14, sind jedoch eine Werkzeugaufnahme 30 und eine mit der Werkzeugaufnahme 30 verbundene Reinigungsvorrichtung 32 vorgesehen. Für die Werkzeugaufnahme 30 sind zwei weitere Freiheitsgrade dargestellt, so dass die Reinigungsvorrichtung 32 entlang einer Nick- und einer Rollachse mit einer Nick- und oder Rollbewegung positionierbar ist. Die Positionierbarkeit der Reinigungsvorrichtung 32 schafft eine Möglichkeit für deren Feinpositionierung, wenn man die mit dem Auslegerarm 12 erreichte Positionierung vor der Solaranlage 28 oder einem davon umfassten Sonnenkollektor 26 als Grobpositionierung auffasst.

Die Verwendung des Auslegersystems 10 mit Werkzeugaufnahme 30 und Reinigungsvorrichtung 32 als Reinigungsanlage für eine Solaranlage 28 ist vorteilhaft, weil aufgrund der Beweglichkeit des davon umfassten Auslegerarms 12 auch entfernte Positionen der Solaranlage 28 erreichbar sind und zwar ohne dass dafür Bedienpersonal den Anbringungsort der Solaranlage 28 und der davon umfassten Solarzellen oder Sonnenkollektoren 26 betreten muss, z.B. ein Dach oder ein sonstiges Gebäudeteil (nicht dargestellt). Das Auslegersystem 10 kann vom Bedienpersonal mit der Bedieneinrichtung 24 gesteuert werden, so dass aufgrund insoweit abgegebener Bedienkommandos die Orientierung und Konfiguration der einzelnen Elemente des Auslegerarms 12 verändert werden kann und die Reinigungsvorrichtung 32 eine gewünschte Position in Bezug auf die Solaranlage 28 erreicht. Danach oder gleichzeitig kann als Feinpositionierung die Orientierung der Reinigungsvorrichtung 32 festgelegt werden. Wenn sich das Bedienpersonal dabei nicht in einem Arbeitskorb 14 (FIG 1) oder dergleichen befindet, ist vorteilhaft eine größere Auslegeweite des Auslegerarms 12, also ein größerer Arbeitsraum der Reinigungsanlage, erreicht, weil die Auslegeweite ganz maßgeblich vom am Ende des Ausleger-arms 12 befindlichen Gewicht bestimmt wird.

Das Bedienpersonal steuert also die Position der Reinigungsvorrichtung 32 in Bezug auf die Solaranlage 28 mit der Bedieneinrichtung 24 aus einer von der Solaranlage 28 entfernten Position, z.B. von einem Aufstellungsort der Reinigungsanlage. Speziell wenn die Bedieneinrichtung 24 von der Steuerungseinrichtung 16 unabhängig ist, mit dieser also auf leitungslosem oder leitungsgebundenem Weg kommunikativ verbunden ist, ist für das Bedienpersonal eine Steuerung der Position der Reinigungsvorrichtung 32 auch aus einer Position möglich, aus der die Solaranlage 28 gut überblickt werden kann, um insoweit die Steuerung der Position der Reinigungsvorrichtung 32 aufgrund von Blickkontakt zu ermöglichen. Die Steuerung des Auslegersystems 10 und der Reinigungsvorrichtung 32 erfolgt, indem mittels der Bedieneinrichtung 24 Bedienkommandos an die Steuerungseinrichtung 16 abgesetzt werden.

Die Reinigungsvorrichtung 32 ist zum Auftragen zumindest eines Reinigungsmittels auf die Solaranlage 28 vorgesehen. Dazu wird entweder entlang des Auslegerarms 12 eine Zuleitung (nicht dargestellt) geführt oder es befindet sich im Bereich der Werkzeugaufnahme 30, etwa in einem unbemannten Arbeitskorb 14 (FIG 1) oder einem Lastkorb (nicht dargestellt) anstelle des Arbeitskorbs 14, ein Reinigungsmittelreservoir, über die bzw. aus dem der Reinigungsvorrichtung 32 das jeweilige Reinigungsmittel zugeführt wird. Wenn die Reinigungsvorrichtung 32 auch eine Spülflüssigkeit vor und/oder nach dem Auftragen des Reinigungsmittels verarbeitet, sind dafür entsprechende Zuleitungen vorgesehen oder es wird eine evtl. als Zuleitung für das Reinigungsmittel bereits vorhandene Zuleitung auch als Zuleitung für Spülflüssigkeit oder dergleichen verwendet. Im letzteren Fall umfasst das Standelement 18 Mittel, um die Zuleitung mit dem jeweiligen Reinigungsmittel-/Flüssigkeitsreservoir zu verbinden. An der Steuerungseinrichtung 16 und/oder mit der Bedieneinrichtung 24 können eine Menge, ein Druck, evtl. eine Temperatur, usw. der Reinigungs- und evtl. Spülflüssigkeiten vorgegeben, eingestellt oder angepasst werden. Damit kann der Reinigungsvorgang an eine jeweilige Verschmutzungssituation der Solaranlage angepasst werden. Des Weiteren ist auch für einen laufenden Reinigungsvorgang eine Änderung einzelner oder mehrerer der oben erwähnten Parameter möglich, etwa um auf lokal unterschiedliche Verschmutzungssituationen zu reagieren, wie sie sich z.B. aufgrund von Kalkablagerungen, Grünspanbildung, Vermoosung oder dergleichen punktuell oder abschnittsweise ergeben können.

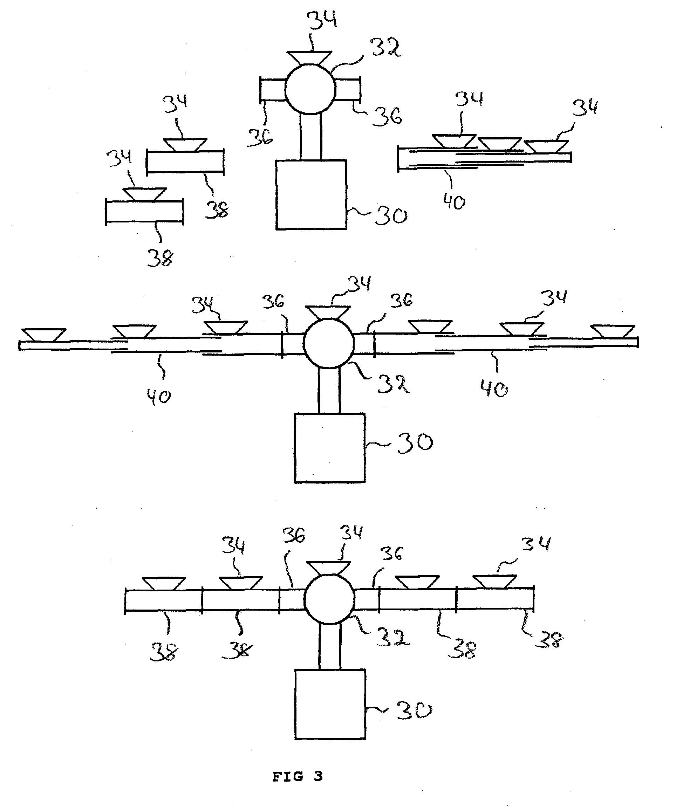

FIG 3 zeigt die Reinigungsvorrichtung 32 immer noch schematisch vereinfacht, aber mit weiteren Details. Danach umfasst diese zumindest eine Düse 34 zum Auftragen von Reinigungsmittel, Spülflüssigkeit und dergleichen. Die oder jede Düse 34 der Reinigungsvorrichtung 32 ist zum berührungslosen Reinigen der Solaranlage 28 vorgesehen. Bei der Düse 34 kann es sich auch um eine Düsenkombination (nicht dargestellt) handeln, derart, dass für jede mit der Reinigungsvorrichtung 32 auftragbare Flüssigkeit ein eigener Austritt vorgesehen ist.

Wie in FIG 3 dargestellt, kann die Reinigungsvorrichtung 32 einen oder mehrere Adapter 36 zum Anbringen weiterer Düsen 34 aufweisen. Dafür kommt als Düsenträger ein Düsenmodul 38 und/oder ein Düsenteleskopelement 40 im Betracht. Das Düsenmodul 38 ist mit jedem Adapter 36 kombinierbar, insbesondere lösbar kombinierbar, und mit jedem der Reinigungsvorrichtung 32 hinzugefügten Düsenmodul 38 erhöht sich je nach dessen Konfiguration (eine Düse 34, zwei Düsen 34, usw.; dargestellt nur in einer Konfiguration mit einer Düse 34) die Gesamtzahl der Düsen 34 und damit die von der Reinigungsvorrichtung 32 beim Reinigungsvorgang erfasst Fläche der Solaranlage 28 (FIG 2). Alternativ oder zusätzlich zur Verwendung eines oder mehrerer Düsenmodule 38 kommen auch ein oder mehrere Düsenteleskopelemente 40 in Betracht. Bei diesem sind davon umfasste einzelne Segmente teleskopierbar, insbesondere aufgrund eines in das Düsenteleskopelement 40 eingebrachten Flüssigkeitsdrucks (also des Betriebsdrucks der jeweiligen Reinigungs- oder Spülflüssigkeit) teleskopierbar, so dass sich im teleskopierten Zustand ebenfalls die beim Reinigungsvorgang erfasst Fläche der Solaranlage 28 erhöht. In einem mittleren Bereich der Darstellung in FIG 3 ist eine Reinigungsvorrichtung 32 mit zwei beidseitig angebrachten Düsenteleskopelementen 40 gezeigt. Die beiden Düsenteleskopelemente 40 sind im teleskopierten Zustand dargestellt. In einem unteren Bereich der Darstellung in FIG 3 ist eine Reinigungsvorrichtung 32 mit mehreren, jeweils beidseitig angebrachten Düsenmodulen 38 gezeigt. Düsenmodule 38 und Düsenteleskopelement 40 können auch kombiniert werden, z.B. derart, dass mit dem Adapter 36 der Reinigungsvorrichtung 32 zunächst ein oder mehrere Düsenmodule 38 und sodann ein abschließendes Düsenteleskopelement 40 kombiniert werden. Zwei oder mehr Düsenmodule 38 oder Düsenteleskopelemente 40 bilden zusammen einen langgestreckten Düsenträger mit einer Mehrzahl von Düsen 34. Anstelle der in FIG 3 dargestellten variablen Konfiguration kann der langgestreckte Düsenträger auch starr und mit der Reinigungsvorrichtung fest, insbesondere einstückig, verbunden sein.

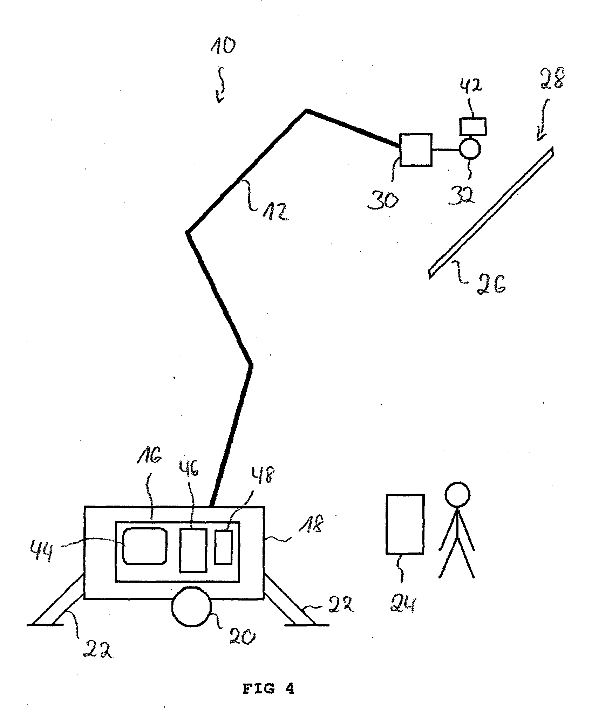

FIG 4 zeigt im Wesentlichen die Reinigungsanlage mit dem mobilen Auslegersystem 10 wie in FIG 2 gezeigt. Zusätzlich umfasst die Reinigungsanlage am Ende des Auslegerarms 12, wie im Bereich der Reinigungsvorrichtung 32 dargestellt, eine Sensorik 42. Als Sensorik 42 kommt eine Vorrichtung zur Bildaufnahme (Bildaufnahmemittel), also z.B. eine Kamera, insbesondere eine Digitalkamera, in Betracht. Im Bereich der Steuerungseinrichtung 16 oder der Bedieneinrichtung 24 oder mit der Steuerungseinrichtung 16 oder der Bedieneinrichtung 24 kombiniert ist als Anzeigevorrichtung 44 ein Monitor oder dergleichen vorgesehen. Mit der Anzeigevorrichtung sind die von den Bildaufnahmemitteln erhältlichen Bildinformationen darstellbar. Zum Betrieb einer Reinigungsanlage erfolgt deren Steuerung mit der Bedieneinrichtung 24 manuell entsprechend der angezeigten Bildinformationen. Die von der Anzeigevorrichtung dargestellten Bildinformationen sind dabei nicht nur für die Positionierung des Auslegersystems 10 und der Reinigungsvorrichtung 32 vorgesehen. Darüber hinaus oder alternativ kommt auch in Betracht, dass die Bildinformation vom jeweiligen Bedienpersonal zur Beurteilung des Reinigungsfortschritts oder Reinigungserfolgs herangezogen wird. In Abhängigkeit von der Bildinformation kann also der Reinigungsvorgang angepasst werden. Insoweit kommen eine Verlängerung oder Verkürzung der Reinigungsdauer, eine Anpassung des Drucks, mit dem das Reinigungsmittel oder evtl. bereits eine Spülflüssigkeit aufgebracht werden, eine Anpassung der Menge des Reinigungsmittels, eine Anpassung der Einwirkdauer des Reinigungsmittels usw. in Betracht. Alternativ oder zusätzlich zu der Auswertung von Bildinformationen kommt selbstverständlich auch in Betracht, die Anpassung des Reinigungsvorgangs in Abhängigkeit von vom Bedienpersonal direkt visuell wahrgenommenen Eindrücken vorzunehmen und zuzulassen. Nochmals alternativ oder zusätzlich kommt in Betracht, den Reinigungsfortschritt oder den Reinigungserfolg automatisch zu erfassen, etwa indem ablaufendes Reinigungsmittel oder ablaufende Spülflüssigkeit aufgefangen und untersucht werden. Wenn sich noch Verunreinigungen, also von der Solaranlage gelöster Schmutz, in der aufgefangenen Menge befinden, kann dies als Maß für den Reinigungsfortschritt/den Reinigungserfolg angesetzt werden. Wenn der Anteil der Verunreinigungen einen vorgegebenen oder vorgebbaren Schwellwert unterschreitet, kann dies dahingehend ausgewertet werden, dass die Reinigung der Solaranlage im aktuellen Abschnitt abgeschlossen ist und die Bewegungsbahn der Reinigungsvorrichtung entsprechend fortgesetzt werden kann. Ist diese Bedingung nach einer vorgegebenen oder vorgebbaren Zeit nicht erfüllt, kann z.B. der Reinigungsvorgang in einem bestimmten zurückliegenden Abschnitt der Bewegungsbahn wiederholt werden und für neue Abschnitte der Bewegungsbahn die Geschwindigkeit der Reinigungsvorrichtung reduziert werden. Allgemein lässt sich dieser Aspekt der Erfindung dahingehend verallgemeinern, dass die Verweildauer der Reinigungsvorrichtung über einem bestimmten Flächenabschnitt der Solaranlage automatisch oder halbautomatisch vom jeweiligen Verunreinigungsgrad abhängig ist, indem ein Maß für die Verschmutzung oder die erreichte Reinigung aufgenommen und ausgewertet wird. Insoweit kommt auch eine Messung der Reflektionseigenschaften der Oberfläche des jeweiligen Abschnitts der Solaranlage in Betracht, wobei der Reflektionsgrad ein Maß für die Verschmutzung oder die erreichte Reinigung ist.

Optional kann z.B. die Steuerungseinrichtung 16 der Reinigungsanlage einen Positionsinformationsspeicher 46 umfassen, in welchem Positionsinformationen ablegbar sind, die eine Position und Orientierung des Auslegersystems 10 und der Reinigungsvorrichtung 32 kodieren. Bei sämtlichen rotatorischen Freiheitsgraden der dargestellten Reinigungsanlage (gieren, nicken, rollen) lässt sich eine solche Positionsinformation als Folge der jeweiligen Stellungen der von der Reinigungsanlage umfassten Freiheitsgrade ausdrücken. Für die in FIG 2 und FIG 4 dargestellte Reinigungsanlage mit sieben Freiheitsgraden lässt sich dies allgemein in Form eines Vektors wie folgt schreiben: (g1, n2, n3, n4, n5, n6, r7), wobei "g" für gieren, "n" für nicken und "r" für rollen stehen, oder allgemein als kx = (α1, ... αn). Der Vektor kx als Positionsinformation bezeichnet dann allgemein eine Konfiguration der Reinigungsanlage über einem Punkt x der Solaranlage 28 oder zu einem Zeitpunkt x. Wenn eine Folge derartiger Positionsinformationen im Positionsinformationsspeicher 46 abgelegt ist, beschreibt diese Folge eine auch als Trajektorie bezeichnete Bewegungsbahn der Reinigungsanlage. Aus dem Positionsinformationsspeicher 46 ist eine solche, durch einzelne Positionsinformationen festgelegte Bewegungsbahn zum erneuten Abfahren abrufbar. Wenn in dem Positionsinformationsspeicher mit jeder Positionsinformation noch eine Zeitinformation verknüpft ist, ergibt sich aus dem räumlichen Abstand zweier aufeinander folgenden Positionsinformationen und der Differenz der zugehörigen Zeitinformationen ein Maß für die Geschwindigkeit der Reinigungsanlage bei der Bewegung zwischen den mit den beiden Positionsinformationen bezeichneten Konfigurationen. Die Geschwindigkeit kann dabei jederzeit für einzelne Übergänge zwischen einer ersten und einer nachfolgenden zweiten Positionsinformation oder alle Positionsinformationen einer Trajektorie angepasst werden, etwa um einer stärkeren Verschmutzung der Solaranlage Rechnung zu tragen.

Eine Reinigungsanlage mit Bildverarbeitungsmitteln, einer Anzeigeeinrichtung und einem Positionsinformationsspeicher 46 kann z.B. zum Auftragen einer ersten Spülflüssigkeit manuell anhand der an der Anzeigevorrichtung 44 angezeigten Bildinformationen gesteuert werden. Dabei wird normalerweise die komplette Oberfläche der Solaranlage 28 erfasst. Zu einzelnen aufgrund der manuellen Bedienung erreichten Konfigurationen kann eine entsprechende Positionsinformation in den Positionsinformationsspeicher 46 aufgenommen werden. Für spätere Reinigungsschritte, also z.B. das Auftragen eines Reinigungsmittels und evtl. das spätere nochmalige Auftragen der Spülflüssigkeit oder einer zweiten Spülflüssigkeit steht die damit gespeicherte Bewegungsbahn zum erneuten Abfahren zur Verfügung. Dazu umfasst die Steuerungseinrichtung 16 eine Verarbeitungseinheit nach Art eines Mikroprozessors 48 oder dergleichen. Eine manuelle Bedienung ist nur noch zum Abrufen des jeweils nächsten Reinigungsschritts erforderlich. Beim erneuten Abfahren kommen ggf. andere Geschwindigkeiten oder an den jeweiligen Reinigungsabschnitt angepasste Geschwindigkeiten zur Anwendung.

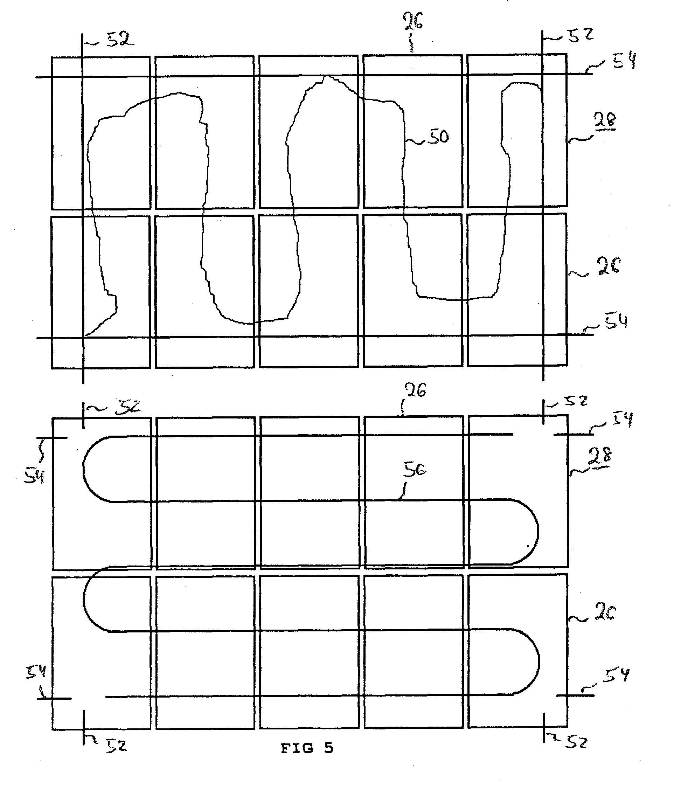

Die Steuerungseinrichtung 16 kann optional auch Optimierungen einer sich aufgrund manueller Bedienhandlungen ergebenden Bewegungsbahn vornehmen. Dies ist exemplarisch und in vereinfachter Form in FIG 5 dargestellt. Gezeigt ist im oberen und im unteren Abschnitt von FIG 5 dieselbe Solaranlage 28 mit einer Mehrzahl von Solarzellen oder Sonnenkollektoren 26. Im oberen Abschnitt von FIG 5 ist eine erste Bewegungsbahn 50 gezeigt, wie sie sich z.B. nach manuellen Bedienhandlungen zur Positionierung der Reinigungsvorrichtung 32 (FIG 4) über der Solaranlage 28 ergeben kann. Es ist klar ersichtlich, dass mit dieser ersten Bewegungsbahn 50 eine gleichmäßige Reinigung der Solaranlage 28 nicht möglich ist. Die Steuerungsvorrichtung kann allerdings anhand der ersten Bewegungsbahn 50 und der dazu im Positionsinformationsspeicher 46 gespeicherten Positionsinformationen bestimmte Extrempositionen, hier vertikale und horizontale Extrempositionen 52, 54, ermitteln und anhand dieser eine verbesserte zweite Bewegungsbahn 56 ermitteln. Die zweite Bewegungsbahn 56 ist zum Vergleich im unteren Abschnitt der Darstellung von FIG 5 gezeigt. Man erkennt unmittelbar, dass entlang der zweiten Bewegungsbahn 56 eine kontinuierliche Bewegung der Reinigungsvorrichtung 32 möglich ist. Zudem wird aufgrund gleicher oder zumindest im Wesentlichen gleicher Abstände zwischen gegenläufigen Abschnitten der zweiten Bewegungsbahn 56 eine verbesserte Gleichmäßigkeit der Reinigungsschritte erreicht.

Alternativ kommt auch in Betracht, dass das Bedienpersonal nicht versucht, eine komplette Bewegungsbahn vorzugeben, sondern stattdessen nur charakteristische Raumpunkte vorgibt. Dazu wird durch manuelle Bedienung mittels der Bedieneinrichtung 24 das Auslegersystem 10 und die Reinigungsvorrichtung 32 nacheinander in charakteristische Raumpunkte der Solaranlage 28 bezeichnende Positionen und Orientierungen verfahren. Als charakteristische Raumpunkte der in FIG 5 gezeigten Solaranlage 28 kommen z.B. deren Eckpunkte in Betracht. Wenn die mit den so definierten charakteristischen Raumpunkten korrelierten Positionsinformationen in dem Positionsinformationsspeicher 46 zwischengespeichert werden, lassen sich daraus Positionierinformationen zur automatischen Steuerung des Auslegersystems 10 und/oder der Reinigungsvorrichtung 32 ableiten. Die Übernahme der jeweiligen Position und Orientierung der Auslegersystems 10 und der Reinigungsvorrichtung 32 als Positionsinformationen in den Positionsinformationsspeicher 46 kann dabei erfolgen, wenn eine vorgegebene oder vorgebbare Bedingung erfüllt ist. Im einfachsten Fall lässt sich eine Erfüllung einer vorgegebenen Bedingung dadurch erreichen, dass das Bedienpersonal eine Bedieneingabe vornimmt, z.B. eine Taste am Bediengerät 24 betätigt. Die insoweit gewonnen Positionierinformationen können zu einer Bewegungsbahn führen, wie sie als zweite Bewegungsbahn 56 im unteren Teil der Darstellung von FIG 5 gezeigt ist. Beim Anfahren der charakteristischen Raumpunkte wird das Bedienpersonal evtl. durch die Bildaufnahmemittel und die Anzeigevorrichtung 44 unterstützt, wenn einzelne Raumpunkt von einem Standpunkt des Bedienpersonals nicht einsehbar sind.

Optional kann auch vorgesehen sein, dass die Reinigungsanlage eine Bewegungsbahnermittlungseinrichtung umfasst. Als Bewegungsbahnermittlungseinrichtung kommt eine Einrichtung zur Bildverarbeitung (Bildverarbeitungsmittel) in Betracht. Die Einrichtung zur Bildverarbeitung wertet Bildinformationen aus, wie sie von in FIG 5 als Sensorik 42 dargestellten Bildaufnahmemitteln geliefert werden. Mit dem oder den Bildverarbeitungsmittel(n) sind Konturen oder Randpunkte der Solaranlage 28 ermittelbar. Die Übernahme der jeweiligen Position und Orientierung des Auslegersystems 10 und der Reinigungsvorrichtung 32 als Positionsinformationen in den Positionsinformationsspeicher 46 kann dabei erfolgen, wenn als vorgegebene Bedingung die Erkennung einer Kontur oder Kante der Solaranlage 28 gelungen ist. Anhand der so erkannten Konturen der Solaranlage 28 lassen sich mittels der Steuerungseinrichtung 16 Positionierinformationen zur automatischen Steuerung des Auslegersystems 10 und/oder der Reinigungsvorrichtung 32 ableiten. Auch die insoweit gewonnenen Positionsinformationen lassen sich für eine spätere Wiederverwendung im Positionsinformationsspeicher 46 ablegen. Besonders vorteilhaft ist dies, wenn durch eine Ermittlung der äußeren Randlinien einer Solaranlage 28 mittels Bildverarbeitung eine eher ungünstige Bewegungsbahn resultiert. Mit den im Positionsinformationsspeicher 46 gespeicherten Positionsinformationen lässt sich eine solche Bewegungsbahn jederzeit nach dem gleichen Prinzip wie anhand von FIG 5 erläutert optimieren. Die Ermittlung einer Bewegungsbahn mittels Bildverarbeitung ist dann nur für einen ersten Reinigungsschritt erforderlich. Für sämtliche folgenden Reinigungsschritte kann die Festlegung dabei abzufahrender Bewegungsbahnen anhand der Positionsinformationen im Positionsinformationsspeicher 46 erfolgen.

Zusätzlich oder alternativ kommt als Bewegungsbahnermittlungseinrichtung auch eine Raumpunktdetektionssensorik zum Erkennen markierter Punkte der Solaranlage 28 und zur Ableitung von Positionierinformationen daraus in Betracht. Die Raumpunktdetektionssensorik ist dabei der Werkzeugaufnahme 30 oder der Reinigungsvorrichtung 32 zugeordnet. Die in FIG 4 gezeigte Sensorik 42 kann die Raumpunktdetektionssensorik umfassen. Mit der Raumpunktdetektionssensorik werden markierte Punkte der Solaranlage 28 ermittelt und daraus Positionierinformationen zur automatischen Steuerung des Auslegersystems 10 und der Reinigungsvorrichtung 32 abgeleitet. Zur Markierung charakteristischer Punkte der Solaranlage 28 kommen Magnete, z.B. in Form von Permanent- oder Elektromagneten, in Betracht. Die jeweiligen Magnetfelder sind mit einem von der Raumpunktdetektionssensorik dafür umfassten Magnetfeldsensor erkennbar. Wird ein Magnetfeld sensiert, bewegt die Steuerungseinrichtung 16 die Kombination aus Auslegersystem 10 und Reinigungsvorrichtung 32 solange, bis ein Maximum des Messwertes erreicht ist, so dass danach feststeht, dass eine Orientierung in ausreichender Nähe des markierten Raumpunktes erreicht ist. Die zugehörige Positionsinformation wird im Positionsinformationsspeicher 46 abgelegt und als Bedingung für deren Übernahme liegt die Erkennung einer Magnetfeldstärke oberhalb eines vorgegebenen oder vorgebbaren Schwellwerts zugrunde.

Zum Vermeiden unerwünschter Kollisionen der Reinigungsvorrichtung 32 mit der Solaranlage 28 kann die Bewegungsbahnermittlungseinrichtung oder die Reinigungsvorrichtung 32 einen Abstandssensor (z.B. einen Abstandssensor wie er derzeit bei Kraftfahrzeugen verwendet wird) aufweisen, durch dessen Auswertung stets ein vorgegebener oder vorgebbarer Minimalabstand zur Oberfläche der Solaranlage 28 eingehalten wird.

Bei einer Raumpunktdetektionssensorik als Bewegungsbahnermittlungseinrichtung werden nacheinander alle oder eine Anzahl der markierten Punkte der Solaranlage 28 angefahren. Anhand der damit gewonnenen Positionsinformationen lassen sich Positionierinformationen zur automatischen Steuerung des Auslegersystems 10 und der Reinigungsvorrichtung 32 ableiten. Zur Markierung charakteristischer Punkte der Solaranlage 28 kommt auch ein elektrischer Leiter in Betracht, der im stromdurchflossenen Zustand bekanntlich von einem Magnetfeld umgeben ist. Dieses Magnetfeld ist mit der Raumpunktdetektionssensorik erkennbar und es lassen sich in gleicher Weise wie bei einer punktuellen Markierung der Solaranlage 28 aufgrund einer linienförmigen Markierung Positionsinformationen und daraus Positionierinformationen zur automatischen Steuerung der Reinigungsanlage gewinnen.

Zur Reinigung einer jeweiligen Solaranlage 28 ist vorgesehen, dass mit der Reinigungsvorrichtung ein Reinigungsmittel und danach eine Spülflüssigkeit - insbesondere zunächst Wasser, dann das Reinigungsmittel und dann die oder eine Spülflüssigkeit - berührungslos auf die Solaranlage 28 aufgetragen wird. Bei einer besonderen Ausführungsform der Reinigungsanlage werden beim Auftrag der Reinigungsflüssigkeit eine Positionsinformation und ein Auftragszeitpunkt festgehalten. Nach Verstreichen einer vorgegebenen oder vorgebbaren Reinigungsflüssigkeitswirkdauer (Einwirkzeit) werden automatisch anhand der Positionsinformation mit Reinigungsflüssigkeit behandelte Bereiche der Solaranlage 28 angefahren. Beim Aufbringen der Spülflüssigkeit an diesen Positionen wird die Reinigungsflüssigkeit oder Reste der Reinigungsflüssigkeit von der Solaranlage abgespült. Durch Erfassen und Überwachen der Reinigungsflüssigkeitswirkdauer wird sichergestellt, dass einerseits die gewünschte Reinigungswirkung eintritt und andererseits die Reinigungsflüssigkeit z.B. nicht auf der Oberfläche der Solaranlage antrocknet und somit deren spätere Entfernung erschwert wird. Die vorgegebene oder vorgebbare Reinigungsflüssigkeitswirkdauer kann variabel sein, wobei insbesondere eine Abhängigkeit von einer Umgebungstemperatur oder einer Strahlungsintensität des einfallenden Sonnenlichts in Betracht kommt.

Bei einer weiteren Ausführungsform der Reinigungsanlage kann vorgesehen sein, dass beim Abruf einer im Positionsinformationsspeicher 46 gespeicherten Bewegungsbahn ein charakteristischer Punkt der Bewegungsbahn automatisch an der Anzeigevorrichtung 44 angezeigt und der Benutzer zum manuellen Anfahren dieses Punkts aufgefordert wird, wobei nach dem manuellen Anfahren dieses Punkts anhand einer sich dann ergebenden Position und Orientierung des Auslegersystems 10 und der Reinigungsvorrichtung 32 die abgerufene Bewegungsbahn auf die Position der Reinigungsanlage umgerechnet wird. Bekanntlich lassen sich Vektoren im Raum mittels sogenannter Rotationsmatrizen um vorgegebene Winkel und Achsen drehen. Für Drehungen um die Achsen eines kartesischen Koordinatensystems ergeben sich vergleichsweise einfache, an sich bekannte Rotationsmatrizen. Jedes Segment des Auslegersystems 10 und die Reinigungsvorrichtung 32 lassen sich entsprechend ihrer Dimension in Längsrichtung als Vektor beschreiben. Ausgehend von einem gedachten Koordinatensystem mit einem Ursprung im Fußpunkt des Auslegersystems 10 lässt sich also bei bekannter Stellung der einzelnen Gelenke von Auslegersystem 10 und Reinigungsvorrichtung 32 und ebenfalls bekannter Länge der einzelnen Segmente die Raumposition der Reinigungsvorrichtung 32 errechnen. Wenn bei der bevorzugten Ausführungsform umgekehrt verfahren wird, also ein vorgegebener Raumpunkt an der Solaranlage 28 angefahren wird, um daraus die Aufstellposition der Reinigungsanlage zu errechnen, müssen die entsprechenden Matrizenoperationen invers angewendet werden. Mit einer so ermittelten aktuellen Aufstellposition und einer beim Abspeichern der Bewegungsbahn für den charakteristischen Punkt ermittelten, ursprünglichen Aufstellposition lässt sich der Abstand zwischen ursprünglicher und aktueller Aufstellposition ermitteln. Dieser Abstand lässt sich durch eine Transformationsmatrix (also eine Kombination ein oder mehrer Rotations- und Translationsmatrizen) ausdrücken. Mit dieser Transformationsmatrix muss jede Positionsinformation im Positionsinformationsspeicher zum Abfahren der dadurch beschriebenen Bewegungsbahn beaufschlagt werden, damit beim Abfahren der Bewegungsbahn die aktuelle Aufstellposition berücksichtigt wird.

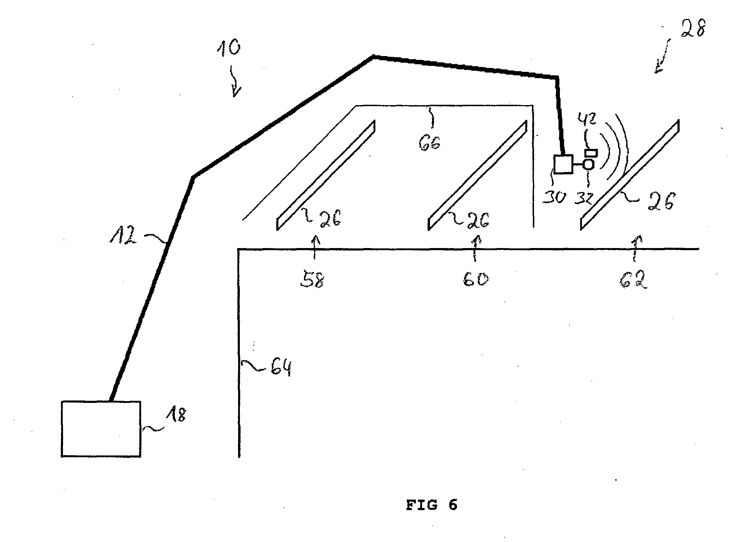

Die Darstellung in FIG 6 greift abschließend nochmals den Aspekt der Kollisionsvermeidung beim Betrieb der Reinigungsanlage auf. Dazu ist in FIG 6 die Reinigungsanlage mit einer Konfiguration wie bereits anhand der FIGen 2-4 beschrieben dargestellt. Weiter dargestellt ist eine Solaranlage 28, bei der die Solarzellen oder Sonnenkollektoren 26 in mehreren Reihen angeordnet sind, hier in einer ersten, zweiten und dritten Reihe 58, 60, 62. Die Solaranlage 28 befindet sich auf einem nur schematisch gezeigten Gebäude 64. Zur Kollisionsvermeidung im Nahbereich der Reinigungsvorrichtung 32 kann ein optionaler, etwa von der Sensorik 42 umfasster Abstandssensor vorgesehen sein. Ein solcher Abstandssensor kann jedoch nicht etwaige Kollisionsgefahren des Auslegerarms 12 mit der Solaranlage 28 erkennen. Die Kollisionsvermeidung kann daher zusätzlich oder unabhängig von einer eventuellen Sensorik auch auf Basis geometrischer Daten erfolgen.

Wenn mit der Reinigungsanlage z.B. aufgrund manueller Bedieneingaben oder aufgrund einer durch Bildverarbeitung unterstützten Bewegungsbahnermittlung, aufgrund einer durch Raumpunktdetektion unterstützten Bewegungsbahnermittlung, usw. eine Reinigung der Elemente der Solaranlage 28 in der ersten Reihe 58 erfolgt ist, liegt mit im Positionsinformationsspeicher gespeicherten Positionsinformationen auch eine Geometrieinformation hinsichtlich der ersten Reihe 58 der Solaranlage vor. Wenn wie im in FIG 6 dargestellten Beispiel angenommen, auch schon die zweite Reihe 60 bearbeitet ist, liegen auch hinsichtlich dieser zweiten Reihe entsprechende Geometrieinformationen vor. Die beim Reinigen erhaltenen Geometrieinformationen sind zur Kollisionsvermeidung verwendbar, indem daraus eine Hüllkontur 66 ermittelt wird, die sämtliche bei der Kollisionsvermeidung zu berücksichtigenden Bestandteile der Solaranlage 28 (und evtl. Gebäudeteile) umfasst. Nachdem das Auslegersystem 10 wie eingangs bereits erwähnt wie ein Sonderfall eines Industrieroboters aufgefasst werden kann, für die Algorithmen zur automatischen Bahnplanung und Algorithmen zur automatischen Planung kollisionsfreier Bewegungsbahnen bekannt sind, wird die Hüllkontur 66 in einem entsprechenden, in der Steuerungseinrichtung 16 implementierten Algorithmus zur automatischen Planung einer kollisionsfreien Bewegungsbahn als zu vermeidender Bereich oder als Hindernis modelliert. Damit kann sichergestellt werden, dass nicht nur in Bezug auf das Ende des Auslegerarms 12, sondern für den gesamten Auslegerarm 12 Kollisionen vermieden werden. Eine solche Kollisionsvermeidung ist nicht nur bei automatischen Bewegungen der Reinigungsanlage, sondern auch bei manueller Bewegung sinnvoll. Bei einer manuellen, z.B. durch Bildinformationen unterstützten Bewegung kann sich bei einer automatischen Kollisionsvermeidung das Bedienpersonal auf die an der Anzeigeeinrichtung dargestellten Bildinformationen, also den Nahbereich um die Reinigungsvorrichtung 32 konzentrieren, während die Steuerungseinrichtung 16 gewährleistet, dass bei Änderungen der Position der Reinigungsvorrichtung 32 eventuelle Kollisionen des Auslegerarms 12 mit der Solaranlage 28 vermieden werden.

Damit lässt sich das oben Gesagte kurz wie folgt zusammenfassen: Es wird eine Reinigungsanlage für Solarzellen, Sonnenkollektoren 26 und dergleichen mit einem frei stehenden, mobilen Auslegersystem und einer Werkzeugaufnahme an dessen Ende angegeben, wobei mit der Werkzeugaufnahme eine Reinigungsvorrichtung verbindbar ist, mit der ein Reinigungsmittel und danach eine Spülflüssigkeit, insbesondere zunächst Wasser, dann das Reinigungsmittel und dann die oder eine Spülflüssigkeit, berührungslos auf die Solaranlage 28 aufgetragen wird. Die Reinigungsanlage eignet sich für einen rein manuellen Betrieb und ermöglicht damit eine Reinigung der Solaranlage 28, ohne dass dafür ein Dach, Gebäude oder dergleichen, auf oder an dem sich die Solaranlage 28 befindet, betreten werden muss. Die Reinigungsanlage kann in unterschiedlichen Kombinationen und Konfigurationen auch als halbautomatische oder automatische Reinigungsanlage fungieren. Insoweit kommt eine Unterstützung des Bedienpersonals durch im Bereich der Werkzeugaufnahme aufgenommene Bildinformationen, aber auch ein automatischer oder teilautomatischer Betrieb durch Ausnutzung einer Bildverarbeitung in Betracht, mit der z.B. Kanten der Solaranlage 28 erkannt werden und eine Bewegung der Reinigungsvorrichtung 32 entlang solcher Kanten erfolgt. Alternativ oder zusätzlich können charakteristische Raumpunkte der Solaranlage 28 auch manuell (oder bildinformations- oder bildverarbeitungsunterstützt) angefahren werden, so dass durch einen Bedienschritt nach Art des so genannten "teach in" die Steuerungsvorrichtung 16 der Reinigungsanlage Geometriedaten der zu reinigenden Solaranlage 28 erhält. Solche charakteristischen Raumpunkte kann die Reinigungsanlage auch automatisch finden, wenn diese geeignet, z.B. magnetisch, markiert sind. Aufgrund solcher Geometriedaten ermittelt die Steuerungsvorrichtung 16 der Reinigungsanlage passende Bewegungsbahnen, um die Reinigungsvorrichtung in gleichbleibendem Abstand vor den Solarzellen oder Sonnenkollektoren 26 entlang zu führen, so dass die einzelnen Reinigungsschritte, insbesondere Spülen, Reinigungen und Abspülen, ablaufen können. Einmal für eine Solaranlage 28 ermittelte Geometriedaten, Positionsinformationen und dergleichen sind in einem Positionsinformationsspeicher 46 abspeicherbar und stehen dort für eine eventuelle spätere Verwendung zur Verfügung. Eine Möglichkeit zur späteren Verwendung solcher Daten ergibt sich z.B. bereits bei ein und demselben Reinigungsvorgang, wenn für einen zweiten Reinigungsschritt die beim ersten Reinigungsschritt erhaltenen Positionsinformationen und z.B. eine daraus resultierende Bewegungsbahn wieder verwendet werden. Selbstverständlich können solche Daten auch solaranlagenspezifisch abgespeichert werden, so dass sie bei einer späteren Reinigung verwendbar sind. Die Reinigungsanlage kann so zu einer im Wesentlichen automatisch arbeitenden Einrichtung werden und der Funktionsumfang lässt sich noch durch Mittel zur Kollisionsvermeidung ergänzen.

**Bezugszeichenliste**

| | | | |
|---|---|---|---|
| 10 | Auslegersystem | 60 | zweite Reihe |
| 12 | Auslegerarm | 62 | dritte Reihe |
| 14 | Arbeitskorb | 64 | Gebäude |
| 16 | Steuerungseinrichtung | | |
| 18 | Standelement | | |
| 20 | Rad | | |
| 22 | Stützelement | | |
| 24 | Bedieneinrichtung | | |
| 26 | Sonnenkollektor | | |
| 28 | Solaranlage | | |
| 30 | Werkzeugaufnahme | | |
| 32 | Reinigungsvorrichtung | | |
| 34 | Düse | | |
| 36 | Adapter | | |
| 38 | Düsenmodul | | |
| 40 | Düsenteleskopelement | | |
| 42 | Sensorik | | |
| 44 | Anzeigeeinrichtung | | |
| 46 | Positionsformations-speicher | | |
| 48 | Mikroprozessor | | |
| 50 | erste Bewegungsbahn | | |
| 52 | erste Extremposition | | |
| 54 | zweite Extremposition | | |
| 56 | zweite Bewegungsbahn | | |
| 58 | erste Reihe | | |

## Patentansprüche

1. Reinigungsanlage für eine Solarzellen und/oder Sonnenkollektoren (26) umfassende Solaranlage (28),
mit einem frei stehenden, mobilen Auslegersystem (10) und
einer Werkzeugaufnahme (30) an dessen Ende sowie
einer Steuerungseinrichtung (16),
wobei mit der Werkzeugaufnahme (30) eine Reinigungsvorrichtung (32) verbindbar ist, wobei die Reinigungsanlage einen Positionsinformationsspeicher (46) umfasst,
in welchem Positionsinformationen ablegbar sind,
die eine Position und Orientierung des Auslegersystems (10) und der Reinigungsvorrichtung (32) kodieren,
wobei eine durch eine Folge derartiger Positionsinformationen festgelegte Bewegungsbahn (50, 56) zum erneuten Abfahren abrufbar ist,
wobei solche Positionsinformationen
bei einem ersten Abfahren einer Bewegungsbahn ermittelbar und/oder
automatisch mit einer zum Absetzen von Positionierinformationen an die Steuerungseinrichtung (16) vorgesehenen Bewegungsbahnermittlungseinrichtung
aufgrund von mit dem Auslegersystem (10) vorgegebenen charakteristischen Raumpunkten oder
mit Bildaufnahme- und Bildverarbeitungsmitteln als Bewegungsbahnermittlungseinrichtung oder
einer Raumpunktdetektionssensorik zum Erkennen markierter Punkte der Solaranlage (28) als Bewegungsbahnermittlungseinrichtung
ableitbar sind.

2. Reinigungsanlage nach Anspruch 1, wobei die Reinigungsvorrichtung (32) zumindest eine Düse (34) zum berührungslosen Reinigen der Solaranlage (28) umfasst.

3. Reinigungsanlage nach Anspruch 2, wobei die Reinigungsvorrichtung (32) einen Düsenträger, insbesondere einen langgestreckten Düsenträger, zur Aufnahme einer Mehrzahl von Düsen (34) umfasst.

4. Reinigungsanlage nach einem der vorangehenden Ansprüche, mit einer zum Absetzen von Bedienkommandos an die Steuerungseinrichtung (16) vorgesehenen Bedieneinrichtung (24) zur manuellen Steuerung des Auslegersystems (10) und/oder der Reinigungsvorrichtung (32).

5. Reinigungsanlage nach Anspruch 4, mit Bildaufnahmemitteln im Bereich der Werkzeugaufnahme (30) und/oder der Reinigungsvorrichtung (32) und einer Anzeigeeinrichtung (44) im Bereich der Bedieneinrichtung (24) oder mit dieser kombiniert, wobei mit der Anzeigeeinrichtung (44) von dem oder den Bildaufnahmemitteln erhältliche Bildinformationen darstellbar sind.

6. Reinigungsanlage nach einem der vorangehenden Ansprüche, mit Bildaufnahmemitteln und Bildverarbeitungsmitteln als Bewegungsbahnermittlungseinrichtung, wobei das oder die Bildaufnahmemittel im Bereich der Werkzeugaufnahme (30) und/oder der Reinigungsvorrichtung (32) angeordnet und das oder die Bildverarbeitungsmittel zur Verarbeitung von von dem oder den Bildaufnahmemitteln erhältlichen Bildinformationen und zur Ableitung von Positionierinformationen daraus vorgesehen sind.

7. Reinigungsanlage nach einem der vorangehenden Ansprüche, mit einer Raumpunktdetektionssensorik zum Erkennen markierter Punkte der Solaranlage (28) und zur Ableitung von Positionierinformationen daraus als Bewegungsbahnermittlungseinrichtung.

8. Reinigungsanlage nach Anspruch 1 und einem der Ansprüche 6 oder 7, wobei jeweils eine Positionsinformation in dem Positionsinformationsspeicher (46) ablegbar ist, wenn eine vorgegebene oder vorgebbare Bedingung erfüllt ist, insbesondere wenn als derartige Bedingung eine Benutzereingabe vorliegt, wobei die Bewegungsbahnermittlungseinrichtung zur Ableitung von Positionierinformationen auf den Positionsinformationsspeicher (46) Zugriff hat.

9. Reinigungsanlage nach Anspruch 8, wobei in dem Positionsinformationsspeicher (46) eine Anzahl von Stützpunkten auf einer beim Reinigen der Solaranlage (28) abgefahrenen Bewegungsbahn (50, 56) wiederaufrufbar abspeicherbar ist, insbesondere solaranlagenspezifisch abspeicherbar ist.

10. Verfahren zum Betrieb einer Reinigungsanlage nach einem der vorangehenden Ansprüche, wobei mit der Reinigungsvorrichtung (32) ein Reinigungsmittel und danach eine Spülflüssigkeit, insbesondere zunächst Wasser, dann das Reinigungsmittel und dann die Spülflüssigkeit, berührungslos auf die Solaranlage (28) aufgetragen werden.

11. Verfahren zum Betrieb einer Reinigungsanlage nach Anspruch 5, wobei die Steuerung mit der Bedieneinrichtung (24) manuell entsprechend der angezeigten Bildinformationen erfolgt.

12. Verfahren zum Betrieb einer Reinigungsanlage nach Anspruch 6 oder nach Anspruch 7, wobei mit dem oder den Bildverarbeitungsmittel(n) Konturen oder Randpunkte der Solaranlage (28) bzw. mit der Raumpunktdetektionssensorik markierte Punkte der Solaranlage (28) ermittelt und daraus Positionierinformationen zur automatischen Steuerung des Auslegersystems (10) und/oder der Reinigungsvorrichtung (32) abgeleitet werden.

13. Verfahren zum Betrieb einer Reinigungsanlage nach Anspruch 8, wobei durch manuelle Bedienung mittels der Bedieneinrichtung (24) das Auslegersystem (10) und die Reinigungsvorrichtung (32) nacheinander in charakteristische Raumpunkte der Solaranlage bezeichnende Positionen und Orientierungen verfahren werden und daraus Positionierinformationen zur automatischen Steuerung des Auslegersystems (10) und/oder der Reinigungsvorrichtung (32) abgeleitet werden.

14. Verfahren nach Anspruch 10 und einem der Ansprüche 11, 12 oder 13, wobei beim Auftrag der Reinigungsflüssigkeit eine Positionsinformation und ein Auftragszeitpunkt festgehalten werden und wobei nach Verstreichen einer vorgegebenen oder vorgebbaren Reinigungsflüssigkeitswirkdauer automatisch anhand der Positionsinformation mit Reinigungsflüssigkeit behandelte Bereiche der Solaranlage (28) angefahren werden und dort die Spülflüssigkeit aufgetragen wird.

15. Verfahren zum Betrieb einer Reinigungsanlage nach Anspruch 9, wobei beim Abruf einer im Positionsinformationsspeicher (46) gespeicherten Bewegungsbahn (50, 56) ein charakteristischer Punkt der Bewegungsbahn (50, 56) automatisch angezeigt und der Benutzer zum manuellen Anfahren dieses Punkts aufgefordert wird, wobei nach dem manuellen Anfahren dieses Punkts anhand einer sich dann ergebenden Position und Orientierung des Auslegersystems (10) und/oder der Reinigungsvorrichtung (32) die abgerufene Bewegungsbahn auf die Position der Reinigungsanlage umgerechnet wird.

## Claims

1. A cleaning system for a solar power plant (28) comprising solar cells and/or solar collectors (26),
comprising a stand-alone mobile cantilever system (10) and
a tool receptacle (30) at the end thereof as well as a control unit (16),
wherein a cleaning device (32) can be connected to the tool receptacle (30), wherein said cleaning system comprises a position information memory (46) where position information can be deposited that encodes a position and an orientation of the cantilever system (10) and of the cleaning device (32),
wherein a path of movement (50, 56) defined by a sequence of such position information can be retrieved for repeated traversing,
wherein such position information can be determined during a first traversing run of a path of movement and/or automatically using a movement path determination device provided for outputting positioning information to the control device (16), which can be derived on the basis of characteristic points in space specified by the cantilever system (10) or by means of imaging and image processing means as a movement path determination unit or by means of space point detection sensors for detecting marked points of the solar power plant (28) as the movement path determination unit.

2. The cleaning system as claimed in claim 1, wherein the cleaning device (32) comprises at least one nozzle (34) for cleaning the solar power plant (28) in a contactless manner.

3. The cleaning system as claimed in claim 2, wherein the cleaning device (32) comprises a nozzle carrier, in particular an elongate nozzle carrier, for receiving a plurality of nozzles (34).

4. The cleaning system as claimed in any one of the preceding claims, comprising an operating unit (24) provided for outputting operating commands to the control unit (16) for the manual control of the cantilever system (10) and/or of the cleaning device (32).

5. The cleaning system as claimed in claim 4, comprising image capturing means in the region of the tool receptacle (30) and/or of the cleaning device (32) and a display unit (44) in the region of the operating unit (24) or in combination therewith, wherein the display unit (44) can be used to represent image information that can be obtained from the one or more image capturing means.

6. The cleaning system as claimed in any one of the preceding claims, comprising image capturing means and image processing means as the movement path determination unit, wherein the one or more image capturing means is/are arranged in the region of the tool receptacle (30) and/or of the cleaning device (32), and the one or more image processing means is/are provided for processing image information that can be obtained from the one or more image capturing means and for deriving positioning information therefrom.

7. The cleaning system as claimed in any one of the preceding claims, comprising space point detection sensors for detecting marked points of the solar power plant (28) and for deriving positioning information therefrom as the movement path determination unit.

8. The cleaning system as claimed in claim 1 and in one of claims 6 and 7, wherein respectively one item of position information can be deposited in the position information memory (46), if a specified or specifiable condition has been met, in particular if a user input as such a condition is present, wherein the movement path determination unit has access to the position information memory (46) in order to derive positioning information.

9. The cleaning system as claimed in claim 8, wherein a number of support points on a path of movement (50, 56) traversed during the cleaning operation of the solar power plant (28) can be stored in the position information memory (46) in a retrievable manner, in particular in a manner specific to a solar power plant.

10. A method for operating a cleaning system as claimed in any one of the preceding claims, wherein a cleaning device (32) is used to apply a detergent and subsequently a rinsing liquid, in particular initially water, then the detergent and after that the rinsing liquid, onto the solar power plant (28) in a contactless manner.

11. The method for operating a cleaning system as claimed in claim 5, wherein the control is carried out manually using the operating unit (24) in correspondence with the displayed image information.

12. The method for operating a cleaning system as claimed in claim 6 or in claim 7, wherein one or more image processing means can be used to determine contours or edge points of said solar power plant (28) or the space point detection sensors can be used to determine marked points of the solar power plant (28) and to derive positioning information therefrom for automatically controlling the cantilever system (10) and/or the cleaning device (32).

13. The method for operating a cleaning system as claimed in claim 8, wherein the cantilever system (10) and the cleaning device (32) are successively traversed, by way of manual operation using the operating unit (24), to positions and orientations which identify characteristic points in space on the solar power plant, and positioning information for the automatic control of the cantilever system (10) and/or of the cleaning device (32) are derived therefrom.

14. The method as claimed in claim 10 and any one of claims 11, 12 and 13, wherein during the application of the cleaning liquid, an item of position information and an application time are recorded, and after the end of a specified or specifiable cleaning liquid soaking duration, regions of the solar power plant (28), which have been treated with cleaning liquid, are automatically approached on the basis of the position information and rinsing liquid is applied there.

15. The method for operating a cleaning system as claimed in claim 9, wherein upon retrieving a path of movement (50, 56) stored in the position information memory (46), a characteristic point of the path of movement (50, 56) is automatically displayed and the user is prompted to approach this point manually, and once this point has been manually approached, the then obtained position and orientation of the cantilever system (10) and/or of the cleaning device (32) are used to convert the retrieved path of movement to the position of the cleaning system.

## Revendications

1. Système de nettoyage pour une installation solaire (28) comprenant des cellules solaires et/ou des collecteurs solaires (26),
avec un système de flèche mobile (10) indépendant, et
un logement d'outil (30) à l'extrémité de celui-ci, et
un dispositif de commande (16),
dans lequel un dispositif de nettoyage (32) peut être relié au logement d'outil (30), dans lequel le système de nettoyage comprend une mémoire d'informations de position (46),
dans laquelle peuvent être enregistrées des informations de position, codant une position et une orientation du système de flèche (10) et du dispositif de nettoyage (32),
dans laquelle un trajet de déplacement (50, 56) définie par une série de ces informations de position peut être recherchée pour être parcouru de nouveau, dans lequel de telles informations de position
peuvent être déterminées lors du premier passage sur un trajet de déplacement, et/ou
déduites automatiquement à l'aide d'un dispositif de détermination de trajet de déplacement prévu pour l'envoi d'informations de positionnement au dispositif de commande (16)
sur la base de points caractéristiques dans l'espace, prédéfinis à l'aide du système de flèche (10) ou
avec des moyens de capture d'image ou de traitement d'image en tant que dispositif de détermination de trajet de déplacement, ou
un capteur de détection de points dans l'espace pour la reconnaissance de points marqués sur l'installation solaire (28), en tant que dispositif de détermination de trajet de déplacement.

2. Système de nettoyage selon la revendication 1, dans lequel le dispositif de nettoyage (32) comprend au moins une buse (34) pour le nettoyage sans contact de l'installation solaire (28).

3. Système de nettoyage selon la revendication 2, dans lequel le dispositif de nettoyage (32) comprend un support de buse, en particulier un support de buse allongé en longueur, pour la réception d'une pluralité de buses (34).

4. Système de nettoyage selon l'une des revendications précédentes, avec un dispositif d'utilisateur (24) prévu pour l'envoi d'ordres d'utilisation au dispositif de commande (16), pour la commande manuelle du système de flèche (10) et/ou du dispositif de nettoyage (32).

5. Système de nettoyage selon la revendication 4, avec des moyens de capture d'image dans la région du logement d'outil (30) et/ou du dispositif de nettoyage (32), et un dispositif d'affichage (44) dans la région du dispositif d'utilisateur (24) ou combiné avec celui-ci, dans lequel le dispositif d'affichage (44) permet de représenter des informations d'image obtenues par le biais du ou des moyen(s) de capture d'image.

6. Système de nettoyage selon l'une des revendications précédentes, avec des moyens de capture d'image et des moyens de traitement d'image en tant que dispositif de détermination de trajet de déplacement, dans lequel le ou les moyen(s) de capture d'image sont agencés dans la région du logement d'outil (30) et/ou du dispositif de nettoyage (32), et le ou les moyens de traitement d'image est/sont prévu(s) pour le traitement d'informations obtenues par le biais du ou des moyen(s) de capture d'image et pour la déduction d'informations de positionnement à partir de celles-ci.

7. Système de nettoyage selon l'une des revendications précédentes, avec un capteur de détection de points dans l'espace pour la reconnaissance de points marqués sur l'installation solaire (28) et la déduction d'informations de positionnement à partir de ceux-ci, en tant que dispositif de détermination de trajet de déplacement.

8. Système de nettoyage selon la revendication 1 et l'une des revendications 6 ou 7, dans lequel une information de position peut être enregistrée respectivement dans la mémoire d'informations de position (46), lorsqu'une condition prédéfinie ou prédéfinissable est remplie, en particulier lorsqu'une telle condition est une entrée d'utilisateur, le dispositif de détermination de trajet de déplacement ayant accès à la mémoire d'informations de position (46) pour la déduction d'informations de positionnement.

9. Système de nettoyage selon la revendication 8, dans lequel un nombre de points d'appui sur un trajet de déplacement (50, 56) parcouru lors du nettoyage de l'installation solaire (28) peuvent être enregistrés dans la mémoire d'informations de position (46) de manière à pouvoir être récupérés, et peuvent en particulier être enregistrés de manière spécifique à l'installation solaire.

10. Procédé pour le fonctionnement d'un système de nettoyage selon l'une des revendications précédentes, dans lequel le dispositif de nettoyage (32) permet d'appliquer un produit de nettoyage, puis un liquide de rinçage, en particulier tout d'abord de l'eau, puis le produit de nettoyage et ensuite le liquide de rinçage, sans contact sur l'installation solaire (28).

11. Procédé pour le fonctionnement d'un système de nettoyage selon la revendication 5, dans lequel la commande est effectuée manuellement à l'aide du dispositif d'utilisateur (24), en fonction des informations d'image affichées.

12. Procédé pour le fonctionnement d'un système de nettoyage (32) selon la revendication 6 ou selon la revendication 7, dans lequel des contours ou des points de bord de l'installation solaire (28) ou encore des points marqués sur l'installation solaire (28) à l'aide du capteur de détection de points dans l'espace sont déterminés à l'aide du ou des moyen(s) de traitement d'image, pour en déduire des informations de positionnement en vue de la commande automatique du système de flèche (10) et/ou du dispositif de nettoyage (32).

13. Procédé pour le fonctionnement d'un système de nettoyage selon la revendication 8, dans lequel une commande manuelle à l'aide du dispositif d'utilisateur (24) permet de déplacer le système de flèche (10) et le dispositif de nettoyage (32) l'un après l'autre vers des positions et des orientations désignant des points caractéristiques dans l'espace sur l'installation solaire, pour en déduire des informations de positionnement en vue de la commande automatique du système de flèche (10) et/ou du dispositif de nettoyage (32).

14. Procédé selon la revendication 10 et l'une des revendications 11, 12 ou 13, dans lequel une information de position et un instant d'application sont mémorisés pour l'application du liquide de nettoyage, et dans lequel, après écoulement d'une durée d'action prédéfinie ou prédéfinissable du liquide de nettoyage, les régions de l'installation solaire (28) qui ont été traitées avec du liquide de nettoyage sont parcourues automatiquement à l'aide de l'information de position, et le liquide de rinçage y est appliqué.

15. Procédé pour le fonctionnement d'un système de nettoyage selon la revendication 9, dans lequel, lors de la recherche d'un trajet de déplacement (50, 56) enregistré dans la mémoire d'informations de position (46), un point caractéristique du trajet de déplacement (50, 56) est indiqué automatiquement et l'utilisateur est invité à aller manuellement vers ce point, sachant qu'après avoir atteint ce point manuellement, le trajet de déplacement recherché sera converti sur la position du système de nettoyage à l'aide d'une position ou d'une orientation résultante du système de flèche (10) et/ou du dispositif de nettoyage (32).
